# EUROPEAN PATENT SPECIFICATION

(11) **EP 3 264 495 B1**
(45) Date of publication and mention of the grant of the patent: **28.08.2019**
(21) Application number: 17166669.6
(22) Date of filing: 13.04.2017
(51) Int. Cl.: H01M 2/10, H01M 2/20

(54) **CURRENT COLLECTING BOARD ASSEMBLY AND POWER BATTERY PACK USING SAME**
STROMABNEHMENDE PLATTENANORDNUNG UND BATTERIEPACK DAMIT
ENSEMBLE CARTE DE COLLECTE DE COURANT ET BLOC BATTERIE DE PUISSANCE L'UTILISANT

(30) Priority: 01.07.2016 CN 201620693898 U; 01.07.2016 CN 201620685425 U
(43) Date of publication of application: 03.01.2018
(73) Proprietor: Optimum Battery Co., Ltd., Shenzhen City, Guangdong 518118 (CN)
(72) Inventor: Xu, Hao, Shenzhen, Guangdong 518118 (CN); Wu, Shi rong, Shenzhen, Guangdong 518118 (CN); Yu, Xiao ming, Shenzhen, Guangdong 518118 (CN); Jia, Zhong gui, Shenzhen, Guangdong 518118 (CN); Yang, Xin Wei, Shenzhen, Guangdong 518118 (CN); Ba, Jing, Shenzhen, Guangdong 518118 (CN)
(74) Representative: Greaves Brewster LLP

(56) References cited:
- EP-A1- 2 290 731
- US-A1- 2016 049 626

## Description

### BACKGROUND OF THE INVENTION

### Field of the Invention

This invention relates to power battery packs, and more particular, to a current collecting board assembly and a power battery pack using the current collecting board assembly.

### Description of the Related Art

Lithium iron phosphate batteries have being rapidly developed in recent years. The lithium iron phosphate batteries are widely employed as powers for vehicles such as cars and buses.

In order to provide a desirable output voltage and output current, a power battery pack employed in a vehicle usually includes a number of single lithium iron phosphate batteries. Generally, a traditional power battery pack can be arranged in such an arrangements, which all of the single batteries of the power battery pack are arranged in a number of parallel groups, and the parallel groups are further connected in series. Each of the parallel groups includes a number of single batteries connected in parallel. The parallel groups of the power battery pack includes two side parallel groups. Rest parallel groups are positioned between the two side parallel groups. The power battery pack also includes a number of printed circuit boards (PCB) and two electrode boards. Each PCB is positioned between two neighbored parallel groups and defines a number of through holes. One end (for example the anode of the single battery) of each single battery is connected with a screw, and the other end (for example the cathode of the single battery) of the single battery is connected with a nut. The screw of the single battery of one parallel group passes through a respective through hole and electrically connected to a PCB. Two single batteries of two neighbored parallel groups are connected with each other in series by the screw engaging with the nut. The electrode boards usually made of copper and includes an anode electrode board and a cathode electrode board and both define though holes corresponding to the through holes of the PCB. The anodes of the single batteries of one side parallel group are fixed in the through holes of the anode electrode board and electrically connected to the anode electrode board. The cathodes of the single batteries of the other side parallel group are fixed in the through holes of the cathode electrode board and electrically connected to the anode electrode board. The anode electrode board and the cathode electrode board are severed as the anode and the cathode of the power battery pack for connecting to a load. However, the single batteries are fixed and electrically connected the PCB and the electrode boards by the through holes, and the single batteries are rigidly connected with each other by the screw and the nut, therefore installation stability and electrical connection stability are poor and the screw may be damaged when the power battery pack suffering vibration. In addition, it increase height of the power battery pack.

European patent application EP 2290731A1 discloses a battery pack has a plurality of batteries 1, and battery holder 2 that dispose the batteries in multiple rows and columns and in parallel orientation. The battery holders are provided with insertion sections 21 separated by dividing walls 22 where the batteries 1 are inserted and held in fixed positions. The batteries 1 are connected in series and parallel by weld-attaching lead-plates 4 to both ends of each battery. Unite States patent application US2016/004926 A1 discloses a battery block including a plurality of cells having safety valve on the negative electrode side, positive electrode plate part provided to the positive electrode side of cells and negative electrode plate part provided to the negative electrode side in order to connect cells in parallel. Negative electrode plate part is an elastic electrode plate part in elastic contact with negative electrode terminal. However, for EP 2290731A1 the lead-plates 4 are welded to the batteries, when one battery is abnormal for example cannot work, it is inconvenient to disassemble and replace the abnormal battery. For US2016/004926 A1 the positive electrode plate part is not elastic electrode plate part in elastic contact with positive electrode terminal. Both EP 2290731 A1 and US2016/004926 A1 fail to teach how to protect the single battery when short circuit occurs.

It is desirable to provide an invention, which can overcome the problems and limitations mentioned above.

### SUMMARY OF THE INVENTION

The present invention is directed to current collecting board and a power battery pack that substantially obviates one or more of the problems due to limitations and disadvantages of the related art.

In an aspect of the present invention, there is provided a power battery pack, comprising: a first housing comprising a first main portion having a first fixing surface and a first connection surface; a number of first receiving portions extending upwardly from the first fixing surface; the first main portion defining a number of first through holes, each first receiving portion surrounding a respective first through hole; a number of first limiting portions extending upwardly from the first connection surface and each first limiting portion surrounding a part of first through holes; a second housing comprising a second main portion having a second fixing surface and a second connection surface; a number of second receiving portions extending upwardly from the second fixing surface; the second main portion defining a number of second through holes, each second receiving portion surrounding a respective second through hole; a number of second limiting portions extending upwardly from the second connection surface and each second limiting portion surrounding a part of second through holes; a number of single batteries, each single battery comprising an anode and a cathode at two ends; two ends of each single battery being received in a first receiving portion and a respective second receiving portion; and a current collecting board assembly comprising two electrode board assemblies respectively received in a first limiting portion and a number of intermediate board assemblies, each intermediate board assemblies being received in a first limiting portion or a second limiting portion; wherein the electrode board assembly comprises a first mounting plate, a first current collecting board mounted on the first mounting plate, and a number of first conductive components; the first conductive component comprises a first elastic member electrically connected to the first current collecting board; the first elastic member comprises a number of first elastic arms extending into the first though hole and abut against one end of the single battery; wherein the intermediate board assembly comprises a second mounting plate, a second current collecting board mounted on the second mounting plate, and a number of second conductive components; the second conductive component comprises a second elastic member electrically connected to the second current collecting board; the second elastic member comprises a number of second elastic arms extending into the first through hole or the second though hole and abut against one end of the single battery; wherein the first mounting plate (411) comprises a first main body (4111), the first main body (4111) comprises a first clamping surface (4113) and a first mounting surface (4114) opposite to the first clamping surface (4113); the first main body (4111) defines a number of first passing holes (4115) passing through the first clamping surface (4113) and the first mounting surface (4114); the first current collecting plate (412) defines a number of first via holes (4121); a number of first limitation protrusions (4120) extend from the first clamping surface (4113), each first limitation protrusion (4120) surrounds a respective first passing hole (4115); each first via hole (4121) corresponds the first passing hole (4115); each first conductive component (413) is received in a respective first protrusion portion (4120); wherein the first conductive component (413) further comprises a first conductive plate (4132) and a first fuse (4133); the first conductive plate (4132) is received in the first limitation protrusion (4120) and attached to the first clamping surface (4113) around the first passing hole (4115); the first elastic member (4131) comprises a first connecting portion (4134) electrically connecting with the first conductive plate (4132), the first elastic arms (4135) of each first elastic member (4131) extend from one side of the first connecting portion (4134); one end of the first fuse (4133) passes through the first passing hole (4115) and the first via hole (4121) and is soldered to the first conductive plate (4132) and the other end is soldered to the first current collecting board (412).

In another aspect of the present invention, there is provided a current collecting board assembly, comprises, two electrode board assemblies; and a number of intermediate board assemblies; wherein the electrode board assembly comprises a first mounting plate, a first current collecting board mounted on the first mounting plate, and a number of first conductive components; the first conductive component comprises a first elastic member electrically connected to the first current collecting board; the first elastic member comprises a number of first elastic arms; the intermediate board assembly comprises a second mounting plate, a second current collecting board mounted on the second mounting plate, and a number of second conductive components; the second conductive component comprises a second elastic member electrically connected to the second current collecting board; the second elastic member comprises a number of second elastic arms; wherein the first mounting plate comprises a first main body, the first main body comprises a first clamping surface and a first mounting surface opposite to the first clamping surface; the first main body defines a number of first passing holes passing through the first clamping surface and the first mounting surface; the first current collecting plate defines a number of first via holes; a number of first limitation protrusions extend from the first clamping surface, each first limitation protrusion surrounds a respective first passing hole; each first via hole corresponds the first passing hole; each first conductive component is received in a respective first protrusion portion, the first elastic arms pass through the first passing hole; wherein the first conductive component (413) further comprises a first conductive plate (4132) and a first fuse (4133); the first conductive plate (4132) is received in the first limitation protrusion (4120) and attached to the first clamping surface (4113) around the first passing hole (4115); the first elastic member (4131) comprises a first connecting portion (4134) electrically contacting with the first conductive plate (4132), the first elastic arms (4135) extend from one side or the first connecting portion (4134); one end of the first fuse (4133) passes through the first passing hole (4115) and the first via hole (4121) and is soldered to the first conductive plate (4132) and the other end is soldered to the first current collecting board (412).

It is to be understood that both the foregoing general description and the following detailed description are exemplary and explanatory and are intended to provide further explanations of the invention as claimed.

### BRIEF DESCRIPTION OF THE DRAWINGS

FIG. 1 is an isometric, schematic view of a power battery pack, according to an embodiment.
FIG. 2 is an isometric, schematic view of the power battery pack of FIG. 1, viewed from another angle.
FIG. 3 is an exploded view of the power battery pack of FIG. 1.
FIG. 4 is an isometric, schematic view of a first housing of the power battery pack of FIG. 1.
FIG. 5 is similar to FIG. 4, but view from another angle.
FIG. 6 is an isometric, schematic view of a second housing of the power battery pack of FIG. 1.
FIG. 7 is top view of single batteries of the power battery pack of FIG. 1.
FIG. 8 is an exploded view of an electrode board assembly of the power battery pack.
FIG. 9 is similar to FIG. 8, but view from another angle.
FIG. 10 is an exploded view of an intermediate board assembly of the power battery pack.
FIG. 11 is similar to FIG. 10, but view from another angle.
FIG. 12 is a top view of a part of the power battery pack of FIG. 1, wherein the first housing and the second housing are hidden.
FIG. 13 is a side view of the FIG. 12.
FIG. 14 is similar to FIG. 12, but view from another angle.

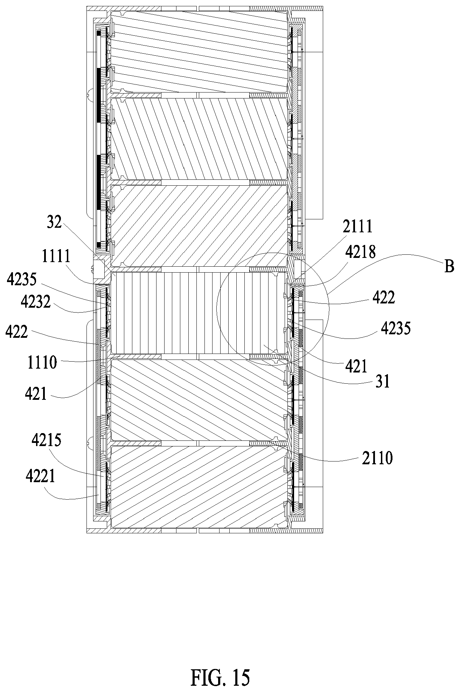

FIG. 15 is a sectional view of FIG. 1 taking along line AA.
FIG. 16 is a partial enlarging schematic of circular B of FIG. 15.

### DETAILED DESCRIPTION OF THE PREFERRED EMBODIMENTS

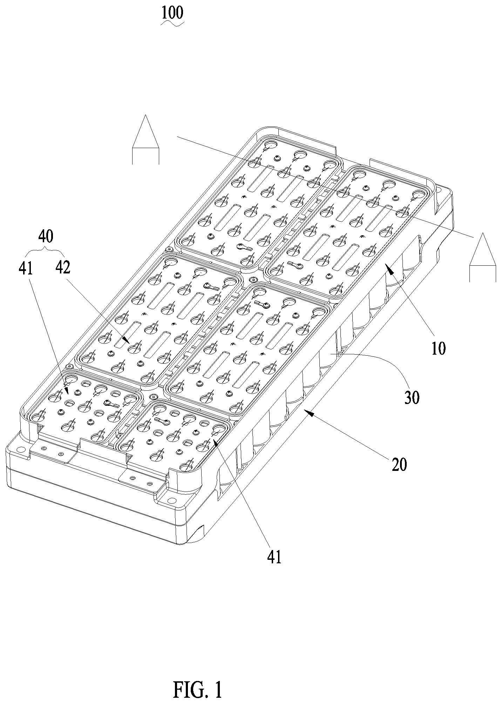

Referring to FIG. 1 to FIG. 3, a power battery pack 100, according to a preferred embodiment, includes a first housing 10, a second housing 20, a number of single batteries 30, and an current collecting board assembly 40.

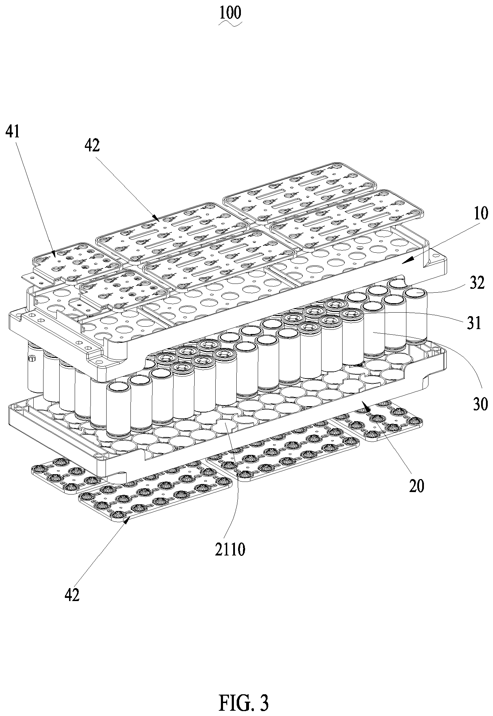

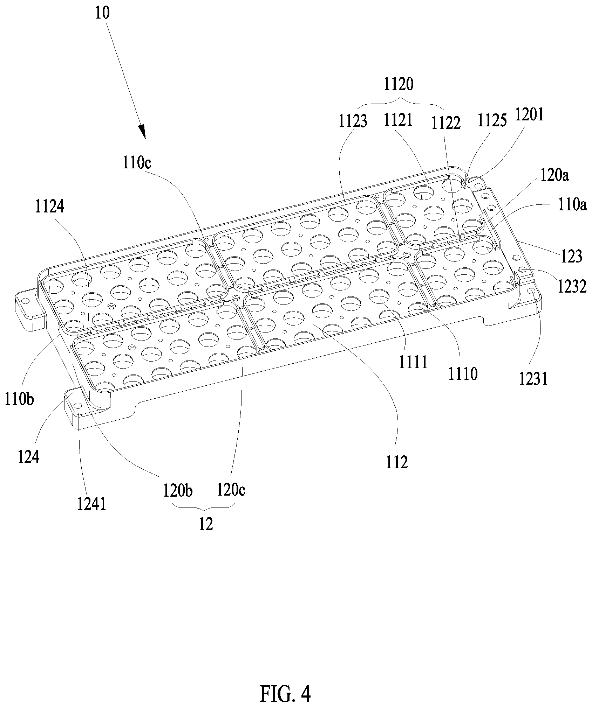

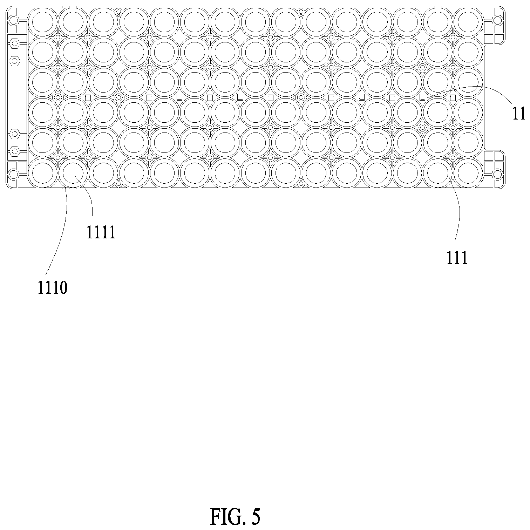

Referring to FIG. 3 to FIG. 5, the first housing 10 is made of dielectric material such as plastic by injection molding. The first housing 10 includes a first main portion 11 and a first sidewall 12 extending around the first main portion 11. The first main portion 11 is substantially a rectangular plate and include a first fixing surface 111 and a first connection surface 112 opposite to the first fixing surface 111. A number of first receiving portion 1110 extend upwardly from the first fixing surface 111. The first main portion 11 defines a number first through holes 1111 passing through the first fixing surface 111 and the first connection surface 112. Each through hole 1111 is surrounded by a respective first receiving portion 1110. In the embodiment, the first receiving portion 1110 is hollow cylindrical. The first through hole 1111 is circular and coaxial with the respective first receiving portion 1110.

A number of first limiting portions 1120 extend upwardly from the first connection surface 112. Each first limiting portion 1120 is generally annular and surrounds a part of the first through holes 1111. The first limiting portions 1120 includes an anode limiting portion 1121, a cathode limiting portion 1122, and a number of first intermediate limiting portions 1123. The first connection surface 112 includes a first spacing area 1124 generally in the middle of the connection surface 112. The anode limiting portion 1121 and the cathode limiting portion 1122 are distributed at two sides of the first spacing area 1124. The first intermediate limiting portions 1123 are also distributed at two sides of the first spacing area 1124.

In the embodiment, the first main portion 11 is rectangular and includes a first short edge 110a, a second short edge 110b parallel to the first short edge 110a, and a pair of first long edges 110c parallel to each other. The first spacing area 1124 is rectangular and in the middle of the first connection surface 112 between the first long edges 110c. The anode limiting portion 1121 and the cathode limiting portion 1122 are symmetrically distributed at two sides of the first spacing areal 124 and adjacent to the first short edge 110a. The first intermediate limiting portions 1123 are also symmetrically distributed at two sides of the first spacing area 1124. In the embodiment, the number of the first intermediate limiting portions 1123 is four. The number of the first through holes 1111 surrounded by each first intermediate limiting portion 1123 is twice of the number of the first through holes 1111 surrounded by the anode limiting portion 1121 or by the cathode limiting portion 1122. For example, the number of the first through holes 1111 surrounded by each first intermediate limiting portion 1123 is eighteen, and the number of the first through holes 1111 surrounded by anode limiting portion 1121 or the cathode limiting portion 1122 is nine.

The first sidewall 12 extends along the first short edge 110a, the second short edge 110b, and the first long edges 110c and surrounds the first fixing surface 111, the first connection surface 112, and also surrounds the first limiting portions 1120. The first sidewall 12 includes a first short sidewall 120a extending along the first short edge 110a, a second short sidewall 120b parallel to the first short sidewall 120a extending along the second short edge 110b, and a pair of first long sidewalls 120c extending along the first long edges 110c. The first short sidewall 120a is positioned at one side of the anode limiting portion 1121 and the cathode limiting portion 1122 and defines two first slots 1201. The anode limiting portion 1121 and the cathode limiting portion 1122 define a second slot 1125, respectively. Each second slot 1125 corresponds to a first slot 1201.

The first housing 10 further includes a first supporting portion 123 extending from one end of the main portion 11 and a pair of first protrusions 124 extending from another end of the first main portion 11. In the embodiment, the first supporting portion 123 extends from the first short edge 110a and is outside of the sidewall 12, the first protrusions 124 extend from the second short edge 110b and are outside of the sidewall 12. The supporting portion 123 is generally cuboid and defines a pair of first screw hole 1231 and two pairs of mounting holes 1232 between the first screw hole 1231. Each pair of the mounting holes 1232 are correspond to a first slot 1201. Each first protrusions 124 is generally cuboid and defines a second screw hole 1241.

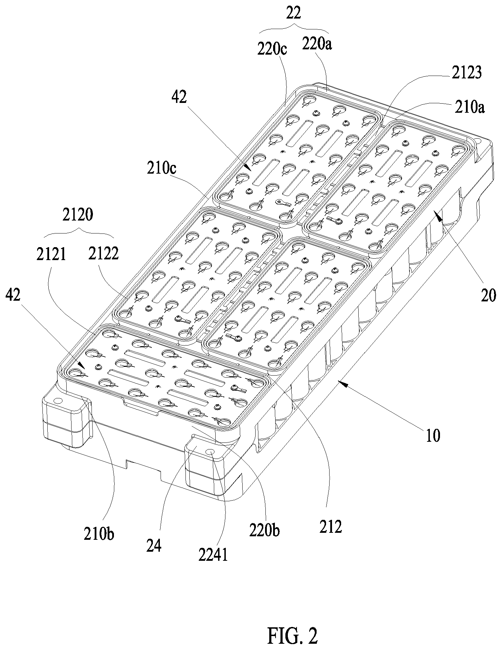

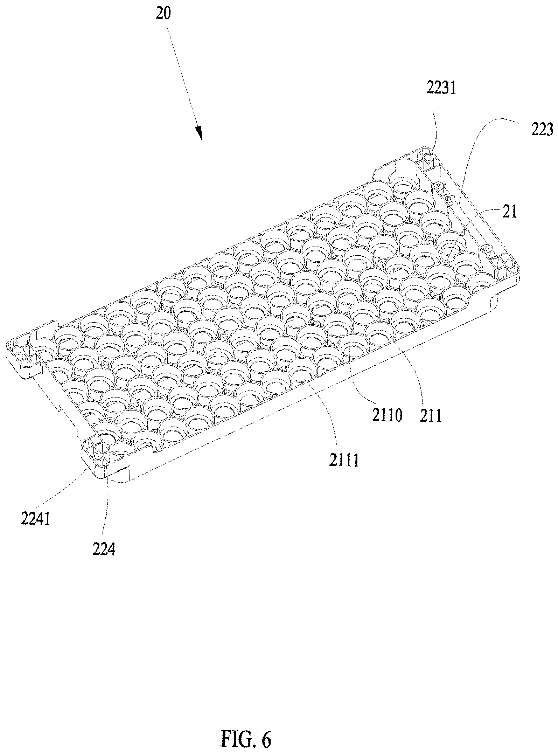

Referring to FIG. 2 and FIG. 6, structure of the second housing 20 is similar to that of the first housing 10 and the second housing 20 is also made of dielectric material such as plastic by injection molding. The second housing 20 includes a second main portion 21 and a second sidewall 22 extending around the second main portion 21. The second main portion 21 is substantially a rectangular plate and includes a second fixing surface 211 and a second connection surface 212 opposite to the second fixing surface 211. A number of second receiving portion 2110 extend upwardly from the second fixing surface 211. The second main portion 21 defines a number second through holes 2111 passing through the second fixing surface 211 and the second connection surface 212. Each second through hole 2111 is surrounded by a respective second receiving portion 2110. In the embodiment, the second receiving portion 2110 is hollow cylindrical. The second through hole 2111 is circular and coaxial with the respective second receiving portion 2110.

A number of second limiting portions 2120 extend upwardly from the second connection surface 212. Each second limiting portion 2120 is generally annular and surrounds a part of the second through holes 2111. The second limiting portions 2120 include a crossing limiting portion 2121 and a number of second intermediate limiting portions 2122. The second connection surface 212 includes a second spacing area 2123 generally in the middle of the second connection surface 212. The crossing limiting portion 2121 is distributed at one end of the second connection surface 212 and crosses the second spacing area 2123. The second intermediate limiting portions 2122 are distributed at two sides of the second spacing area 2123.

In the embodiment, the second main portion 21 is rectangular and includes a third short edge 210a, a fourth short edge 210b parallel to the third short edge 210a, and a pair of second long edges 210c parallel to each other. The second spacing area 2123 is rectangular and in the middle of the second connection surface 212 between the second long edges 210c. The second intermediate limiting portions 2122 are symmetrically distributed at two sides of the second spacing area 2123. In the embodiment, the number of the second intermediate limiting portions 2122 is four. The number of the second through holes 2111 surrounded by the crossing limiting portion 2121 is equal to the number of the second through holes 2111 surrounded by each second intermediate limiting portion 2122 and also equal to the number of the through holes 1111 surrounded by each first intermediate limiting portion 1123. For example, the number of the second through holes 2111 surrounded by the crossing limiting portion 2121 or each second intermediate limiting portion 2122 is eighteen.

The second sidewall 22 extends along the third short edge 210a, the fourth short edge 210b, and the second long edges 210c and surrounds the second fixing surface 211, the second connection surface 212, and also surrounds the second limiting portions 2120. The second sidewall 22 includes a third short sidewall 220a extending along the third short edge 210a, a fourth short sidewall 220b extending along the fourth short edge 210b, and a pair of second long sidewall 220c extending along the second long edges 210c.

The second housing 20 further includes a second supporting portion 223 extending from one end of the second main portion 21 and a pair of second protrusions 224 extending form another end of the second main portion 21. In the embodiment, the second supporting portion 223 extends from the third short edge 210a and is outside of the second sidewall 22, the second protrusions 224 extend from the fourth short edge 210b and are outside of the second sidewall 22. The second supporting portion 223 is generally cuboid and defines a pair of third screw holes 2231. Each second protrusions 224 is generally cuboid and defines a fourth screw hole 2241.

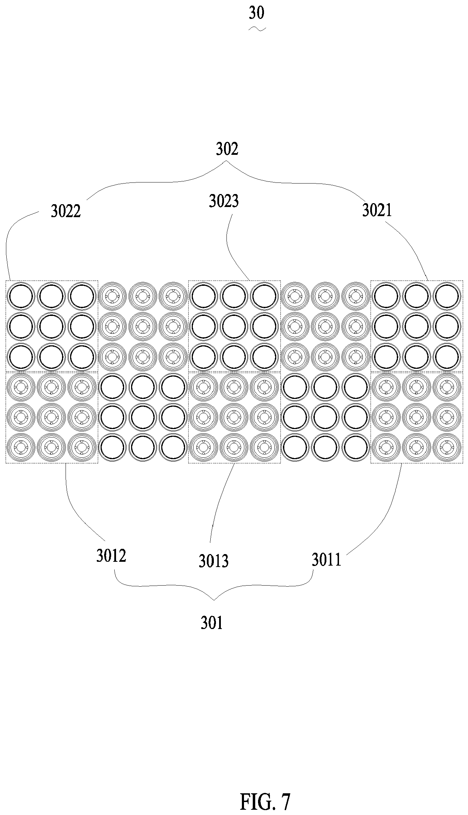

Referring to FIG.3 and FIG. 7, in the embodiment, each single battery 30 is a lithium iron phosphate battery. The single battery 30 is cylindrical and includes an anode 31 at one end and a cathode 32 at the other end opposite to the anode 31. All of the batteries 30 are composed by a number of first groups 301 and a number of second groups 302. The anodes of the single batteries 30 of the first group 301 face the first housing 10. The cathodes of the single batteries 30 of the second group 302 face the first housing 10. The first groups 301 include an anode group 3011, a first crossing group 3012, and a number of first intermediate groups 3013. The second groups 302 include a cathode group 3021, a second crossing group 3022, and a number of second intermediate groups 3023. The first groups 301 and the second groups 302 are arranged in two rows and in interval. The anode group 3011 and the cathode group 3021 are at one end of all of the single batteries 30 and next to each other. The first crossing group 3012 and the second crossing group 3022 are at the other end of all of the single batteries away from the anode group 3011 and the cathode group 3021 and next to each other. The first intermediate groups 3013 and the second intermediate groups 3023 are respectively poisoned between the anode group 3011 and the first crossing group 3212, and between the cathode group 3021 and the second crossing group 3022.

The number of the single batteries 30 of the anode group 3011 is equal to that of the cathode group 3021, or that of the first crossing group 3212, or that the second crossing group 3022, or that of each of the first intermediate groups 3013 or that of each of the second intermediate groups 3023. In the embodiment, the number of the single batteries of the anode group 3011 is nine. The number of the first intermediate groups or 3013 or the second intermediate groups 3023 is three.

Referring to FIG. 1, and FIG.2, and FIG. 3, the current collecting board assembly 40 includes two electrode board assemblies 41 and a number intermediate board assemblies 42.

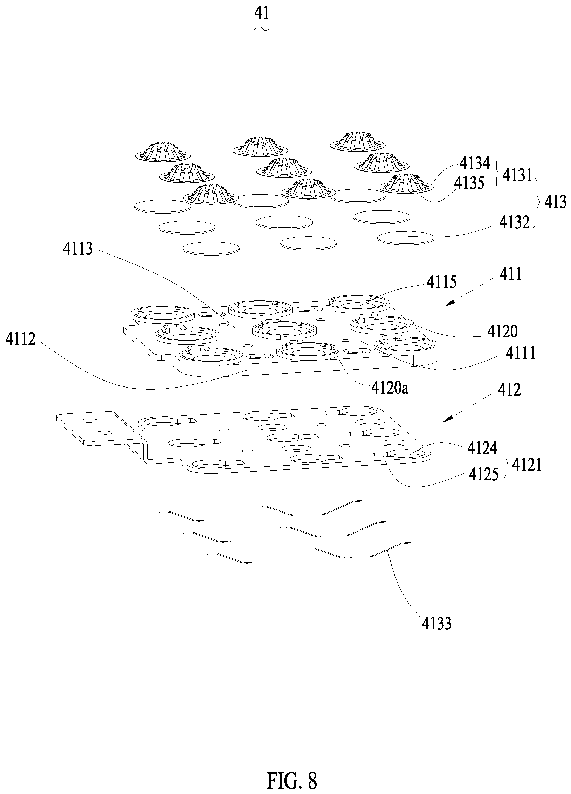

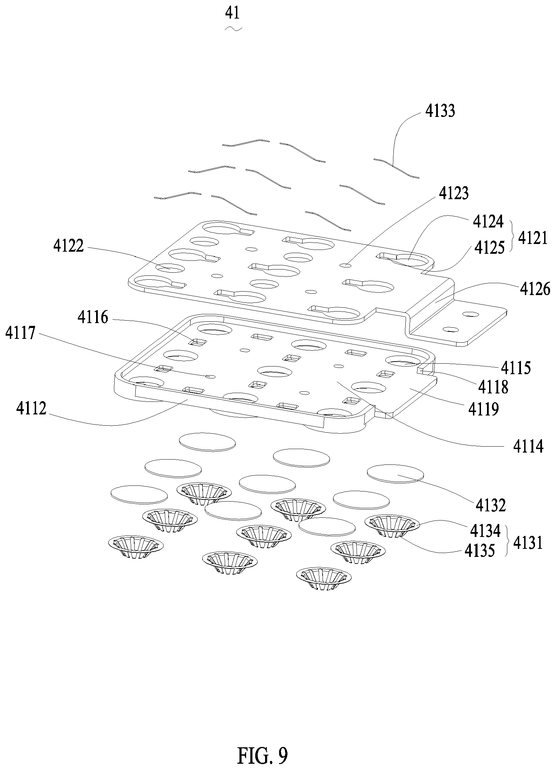

Referring to FIG. 8 and FIG. 9, each electrode board assembly 41 includes a first mounting plate 411, a first current collecting board 412, and a number of first conductive components 413. The first mounting plate 411 is made of dielectric material such as plastic by injection molding. The first mounting plate 411 includes a first main body 4111 and a first lateral wall 4112 extending along edge of the first main body 4111. In the embodiment, the first main body 4111 is a substantially square plate and includes a first clamping surface 4113 and a first mounting surface 4114 opposite to the first clamping surface 4113. The first main body 411 defines a number of first passing holes 4115, first heat dissipation holes 4116, and first fixing holes 4117 passing through the first clamping surface 4113 and the first mounting surface 4114. The first lateral wall 4112 defines an opening 4118. A contact portion 4119 extends from the main body 4111 and passes the opening 4118. In the embodiment, the number of the first passing holes 4115 is equal to that of the first through holes 1111 surrounded by the anode limiting portion 1121. The first passing hole 4115 is circular.

A number of first limitation protrusions 4120 extend from the first clamping surface 4113. Each first limitation protrusion 4120 surrounds a respective first passing hole 4115. In the embodiment, the first limitation protrusion 4120 is hollow cylindrical and coaxial with the first passing hole 4115. An inner diameter of the first limitation protrusion 4120 is greater than the diameter of the first passing hole 4115. An outer diameter of the first limitation protrusion 4120 corresponds the diameter of the first through hole 1111. Each first limitation protrusion 4120 further defines a first mounting slot 4120a.

The first current collecting board 412 is made of metal such as copper and is a substantially square plate. The first current collecting board 412 defines a number of first via holes 4121, second heat dissipation holes 4122, and second fixing holes 4123 passing through the first current collecting board 412. Each first via hole 4121 corresponding to a first passing hole 4115. The first via hole 4121 is generally in a bat shape and includes a first wide part 4124 and a first narrow part 4125. In the embodiment, the first wide part 4124 is circular and a diameter of the first wide part 4124 corresponds to that of the first passing hole 4115. The first narrow part 4125 is rectangular and communicating with the wide part 4124. A width of the narrow part 4125 is smaller than the diameter of the first wide part 4124. The first current collecting board 412 further includes an electrode ear 4126 extending and bending from one side of the first current collecting board 412. The electrode ear 4126 is generally in a "Z" shape.

Each first conductive components 413 corresponds to a first passing hole 4115. Each first conductive component 413 includes a first elastic member 4131, a first conductive plate 4132, and a first fuse 4133. The first elastic member 4131 is made of metal such as copper and includes a first connecting portion 4134 and a number of first elastic arms 4135 spaced from each other and extending upwardly at one side of the connecting portion 4134. In the embodiment, the first connecting portion 4134 is an annular ring, the first elastic arms 4135 extend from an inner side of the annular ring and a distal end of each first elastic arm 4135 extends toward a center axis of the annular ring. An outer diameter of the first connecting portion 4134 corresponds to the inner diameter of the first limitation protrusion 4120. The first conductive plate 4132 is made of metal such as copper and is configured for soldering to the first connecting portion 4134. In the embodiment, the first conductive plate 4132 is circular and a diameter of the first conductive plate 4132 corresponds to the outer diameter of the first connecting portion 4134. The first connecting portion 4134 is coaxial with the first conductive plate 4132 and soldered to the first conductive plate 4132. The first fuse 4133 is made of stibium and is in a wire shape.

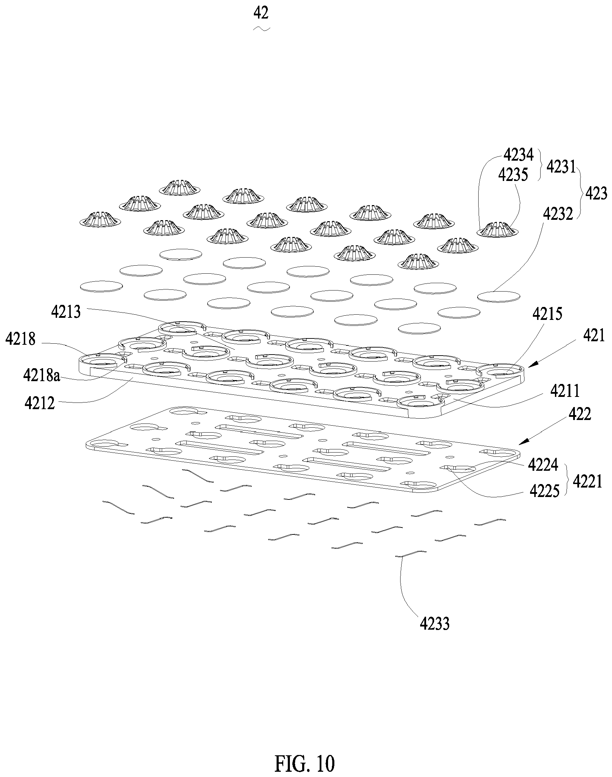

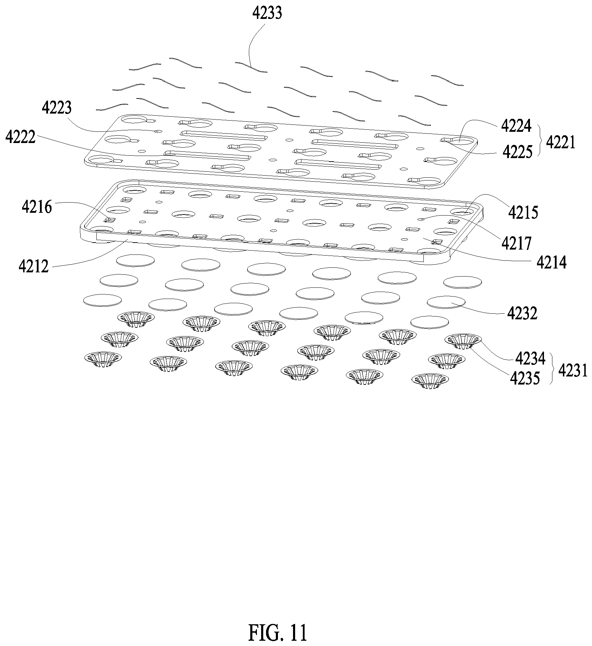

Referring to FIG. 10 and FIG. 11, each intermediate board assembly 42 is substantially similar to the first current collecting board assembly 41. Each intermediate board assembly 42 includes a second mounting plate 421, a second current collecting board 422, and a number of second conductive components 423. The second mounting plate 421 is made of dielectric material such as plastic by injection molding. The second mounting plate 421 includes a second main body 4211 and a second lateral wall 4212 extending along edge of the second main body 4211. In the embodiment, the second main body 4211 is a substantially rectangular plate and includes a second clamping surface 4213 and a second mounting surface 4214 opposite to the second clamping surface 4213. The second main body 4211 defines a number of second passing holes 4215, third heat dissipation holes 4216, and third fixing holes 4217 passing through the second clamping surface 4213 and the second mounting surface 4214. The second lateral wall 4212 surrounds the second main body 4211. In the embodiment, the number of the second passing holes 4215 is equal to that of the first through holes 1111 surrounded by the first intermediate limiting portion 1123. The second passing hole 4215 is circular and is the same as the first passing hole 4115.

A number of second limitation protrusions 4218 extend from the second clamping surface 4213. Each second limitation protrusion 4218 surrounds a respective second passing hole 4215. In the embodiment, the second limitation protrusion 4218 is hollow cylindrical and coaxial with the second passing hole 4215. An inner diameter of the second limitation protrusion 4218 is greater than the diameter of the second passing hole 4215. An outer diameter of the second limitation protrusion 4218 corresponds to the diameter of the first through hole 1111 or the second through hole 2111. The second limitation protrusion 4218 is the same as the first limitation protrusion 4120. Each second limitation protrusion 4218 further defines a second mounting slot 4218a.

The second current collecting board 422 is made of metal such as copper and is a substantially rectangular plate. The second current collecting board 422 defines a number of second via holes 4221, fourth heat dissipation holes 4222, and fourth fixing holes 4223 passing through the second current collecting board 422. Each second via holes 4221 corresponding to a second passing hole 4215. The second via hole 4221 is generally in a bat shape and includes a second wide part 4224 and a second narrow part 4225. In the embodiment, the second wide part 4224 is circular and a diameter of the second wide part 4224 corresponds to that of the second passing hole 4215. The second narrow part 4225 is rectangular and communicating with the second wide part 4224. A width of the second narrow part 4225 is smaller than the diameter of the second wide part 4224.

Each second conductive components 423 is the same as the first conductive component 413 and corresponds to a second passing hole 4215. Each second conductive component 423 includes a second elastic member 4231, a second conductive plate 4232, and a second fuse 4233. The second elastic member 4231 is made of metal such as copper and includes a second connecting portion 4234 and a number of second elastic arms 4235 spaced from each other and extending upwardly at one side of the second connecting portion 4234. In the embodiment, the second connecting portion 4234 is an annular ring, the second elastic arms 4235 extend from an inner side of the annular ring and a distal end of each second elastic arm 4235 extends toward a center axis of the annular ring. An outer diameter of the second connecting portion 4234 corresponds to the inner diameter of the second limitation protrusion 4218. The second conductive plate 4232 is made of metal such as copper and is configured for soldering to the second connecting portion 4234. In the embodiment, the second conductive plate 4232 is circular and a diameter of the second conductive plate 4232 corresponds to the outer diameter of the connecting portion 4234. The second connecting portion 4234 is coaxial with the second conductive plate 4232 and soldered to the second conductive plate 4232. The second fuse 4233 is made of stibium and is in a wire shape.

When assembling, first referring to FIG. 8 to FIG. 11, the first current collecting board 412 is attached to the mounting surface 4114 of the first main body 4111. Edge of the first current collecting board 412 is clamped by the first lateral wall 4112. The ear portion 4126 passes the opening 4118 and attaches to the contact portion 4119. Each first via hole 4121 is aligned to and communicated with a respective first passing hole 4115. In the embodiment, the first wide part 4124 is coaxial with the first passing hole 4115. Screws pass through the second fixing hole 4123 and the first fixing hole 4117 such the first current collecting board 412 is steadily fixed to first mounting plate 411. Each first conductive plate 4132 is received in a respective first limitation portion 4120 and attached to the first clamping surface 4113 around a respective first passing hole 4115. The first conductive plate 4132 is clamped by the first limitation portion 4120 and closes the first passing hole 4115. In alternative embodiment, the first conductive plate 4132 can be adhered to the first clamping surface 4113 by glue. The first elastic member 4131 is received in a respective first limitation portion 4120 with the first connecting portion 4134 being attached to and soldered to the first conductive plate 4132. In the embodiment, the first connecting portion 4134 is also clamped by the first limitation portion 4120 and is coaxial with the first conductive plate 4132. Then one end of each first fuse 4133 passes the first via hole 4121 and a respective first passing hole 4115 and soldered to the first conductive plate 4132, the other end of the first fuse 4133 is soldered to the first current collecting board 412. In the embodiment, the first fuse 4133 passes the first wide part 4124 of the first via hole 4121 and separately faces the first narrow part 4125. The first elastic member 4131 is electrically connected to the first current collecting board 412 by the first conductive plate 4132 and the first fuse 4133. Therefore, each electrode board assembly 41 is assembled.

The second current collecting board 422 is attached to the second mounting surface 4214 of the second main body 4211. Edge of the second current collecting board 422 is clamped by the second lateral wall 4212. Each second via hole 4221 is aligned to and communicated with a respective second passing hole 4215. In the embodiment, the second wide part 4224 is coaxial with the second passing hole 4215. Screws pass through the fourth fixing hole 4223 and the third fixing hole 4217 such the second current collecting board 422 is steadily fixed to second mounting plate 421. Each second conductive plate 4232 is received in a respective second limitation portion 4218 and attached to the second clamping surface 4213 around a respective second passing hole 4215. The second conductive plate 4232 is clamped by the second limitation portion 4218 and closes the second passing hole 4215. In alternative embodiment, the second conductive plate 4232 can be adhered to the second clamping surface 4213 by glue. The second elastic member 4231 is received in a respective second limitation portion 4218 with the second connecting portion 4234 being attached to and soldered to the second conductive plate 4232. In the embodiment, the second connecting portion 4234 is also clamped by the second limitation portion 4218 and is coaxial with the second conductive portion 4232. Then one end of each second fuse 4233 passes the second via hole 4221 and a respective second passing hole 4215 and soldered to the second conductive plate 4231, the other end of the second fuse 4233 is soldered to the second current collecting board 422. In the embodiment, the second fuse 4233 passes the second wide part 4224 of the second via hole 4221 and separately faces the second narrow part 4225. The second elastic member 4231 is electrically connected to the second current collecting board 422 by the second conductive plate 4232 and the second fuse 4233. Therefore, each intermediate board assembly 42 is assembled.

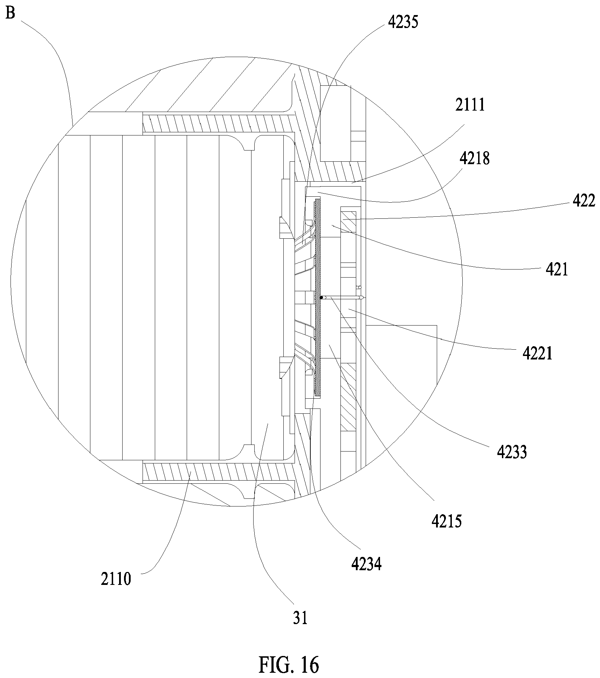

Then referring to FIG.1 to FIG. 4, FIG. 8, FIG. 11, and FIG. 16, two assembled electrode board assemblies 41 are respectively positioned in the anode limiting portion 1121 and the cathode limiting portion 1122. The first clamping surface 4113 faces the first connection surface 112, namely the first mounting plate 411 is positioned between the first current collecting board 412 and the first main portion 11. Each first though hole 1111 sleeves a respective first limitation protrusion 4120, and the first elastic arms 4135 of each second elastic member 4131 extend into the first through hole 1111. The first lateral wall 4112 contacts an inner surface of the anode limiting portion 1121 or the cathode limiting portion 1122. The contact portion 4119 and the ear portion 4126 pass a first slot 1201 and a corresponding second slot 1125. The ear portion 4126 is mounted to the first supporting portion 123 by the mounting holes 1232.

Each first intermediate limiting portion 1123 receives an assembled intermediate board assembly 42. The second clamping surface 4213 of the second mounting plate 421 received in first intermediate limiting portion 1123 faces the first connection surface 112, namely the second mounting plate 421 is positioned between the second current collecting board 422 and the first main portion 11. Each first through hole 1111 sleeves a respective second limitation protrusion 4218, and the second elastic arms 4235 of each second elastic member 4231 extend into the first through hole 1111. The second lateral wall 4212 contacts an inner surface of the first intermediate limiting portion 1123.

Each second intermediate limiting portion 2122 receives an assembled intermediate board assembly 42. The second clamping surface 4213 of the second mounting plate 421 received in the second intermediate limiting portion 2122 faces the second connection surface 212, namely the second mounting plate 421 is position between the second current collecting board 422 and the second main portion 21. Each second through hole 2111 sleeves a respective second limitation protrusion 4218, and the second elastic arms 4235 of each second elastic member 4231 extend into the second through hole 2111. The second lateral wall 4212 contacts an inner surface of the second limiting portion 2122.

The crossing limiting portion 2121 receives an assembled intermediate board assembly 42. The second clamping surface 4213 of the second mounting plate 421 received in the crossing limiting portion 2122 faces the second connection surface 212, namely the second mounting plate 421 is positioned between the second current collecting board 422 and the second main portion 21. Each second through hole 2111 sleeves a respective second limitation protrusion 4218, and the second elastic arms 4235 of each second elastic member 4231 extend into the second through hole 2111. The second lateral wall 4212 contacts an inner surface of the crossing limiting portion 2121.

Then referring to FIG.3 to FIG.7, one end of each single battery 30 is received in a respective first receiving portion 1110 of the first housing 10, and the other end is received in a respective second receiving portion 2110 of the second housing 20.

To be specific, anodes of single batteries of the anode group 3011 received in the first receiving portions 1110 and each single battery corresponds to a first through hole 1111 surrounded by the anode limiting portion 1121. The first elastic arms 4135 of each first elastic member 4131 of one electrode board assembly 41 extend in to the first through hole 1111 and abut against the anode of a respective single battery 30 of the anode group 3011. Cathodes of single batteries 30 of the anode group 3011 received in the second receiving portions 2110 and each single battery corresponds to a second through hole 2111 surrounded by the second intermediate limiting portion 2122. The second elastic arms 4235 of each second elastic member 4231 of one intermediate board assembly 42 extend into the second through hole 2111 and abut against the cathode of a respective single battery 30 of the anode group 3011.

Cathodes of single batteries 30 of the cathode group 3012 received in the first receiving portions 1110 and each single battery corresponds to a first through hole 1111 surrounded by the cathode limiting portion 1122. The first elastic arms 4135 of each first elastic member 4131 of the other electrode board assembly 41 extend into the first through hole 1111 and abut against the cathode of a respective single battery 30 of the cathode group 3012. Anodes of single batteries 30 of the cathode group 3012 received in the second receiving portions 2110 and each single battery corresponds to a second through hole 2111 surrounded by the intermediate limiting portion 2122. The second elastic arms 4235 of each second elastic member 4231 of one intermediate board assembly 42 extend into the second through hole 2111 and abut against the anode of a respective single battery 30 of the cathode group 3012.

Anodes of single batteries 30 of a first intermediate group 3013 and cathodes of single batteries of the cathodes of a second intermediate group 3023 received in the first receiving portions 1110 and each single battery 30 corresponds to a first through hole 1111 surrounded by the first intermediate limiting portion 1123. The second elastic arms 4235 of each second elastic member of the immediate board assembly 42 extend into the first through hole 1111 and abut against the anode of a respective single battery of the first intermediate group 3013, or abut against the cathode of a respective single battery of the second intermediate group3023. Cathodes of single batteries 30 of the first intermediate group 3013 and anodes of single batteries of the second intermediate group 3022 received in the second receiving portions 2110 and each single battery 30 corresponds to a second through hole 2111 surrounded by the second intermediate limiting portion 2122. The second elastic arms 4235 of each second elastic member 4231 of the second electrode assembly 42 extend into the second through hole 2111 and abut again the cathode of a respective single battery 30 of the first intermediate group 3013, or abut against the anode of a respective single battery 30 of the second intermediate group 3023.

Anodes of single batteries of the first crossing groups 3012 and cathodes of single batteries 30 of second crossing groups 3022 received in the first receiving portions 1110 and each single battery 30 corresponds to a first through hole 1111 surrounded by the first intermediate limiting portion 1123. The second elastic arms 4235 of the immediate board assembly 42 received in the first immediate limitation 1123 extend into the first through hole 1111 and abut against the anode of a respective single battery of the first crossing group 3012, or abut against the cathode of a respective single battery 30 of the second crossing group 3022. Cathodes of single batteries 30 of a first crossing group 3012 and anodes of single batteries 30 of the second crossing group 3022 received in the second receiving portions 2110 and each single battery 30 corresponds to a second through hole 2111 surrounded by the crossing limiting portion 2121. The second elastic arms 4235 of the immediate board assembly 42 received in the crossing limiting portion 2121 extend into the second through hole 2111 and abut against the cathode of a respective single battery 30 of the first crossing group 3012, or abut against the anode of a respective single battery 30 of the second crossing group 3022. The first groups 301 and the second groups 302 are fixed between the first housing 10 and the second housing 20 and located at two sides of the first spacing area 1124 of the first housing 10 and at two sides of the second spacing area 2123 of the second housing 20.

Finally, the first housing 10 and the second housing 20 are mounted together by bolts passing through the first screw holes 1231 and corresponding the third screw holes 2231; and passing the second screw holes 1241 and corresponding fourth screw holes 2241.

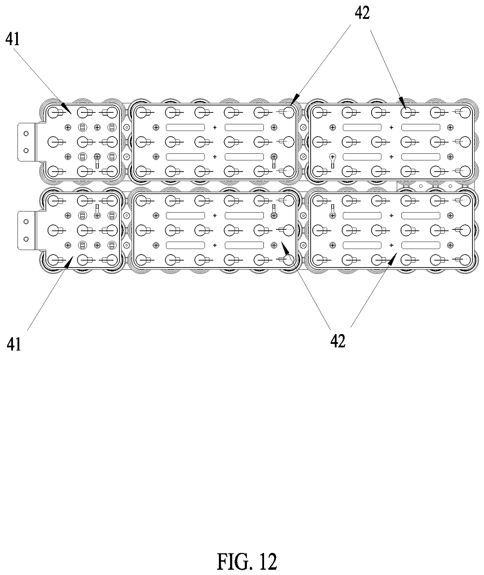

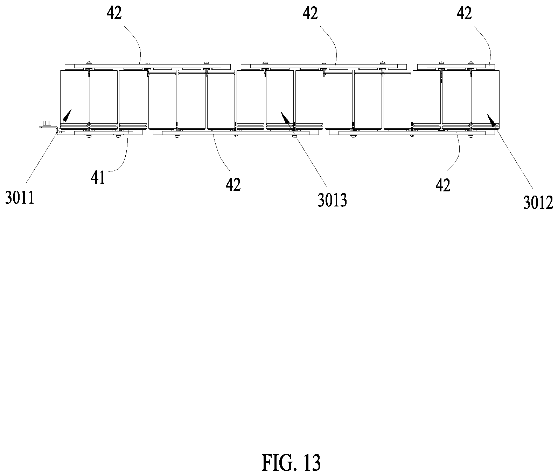

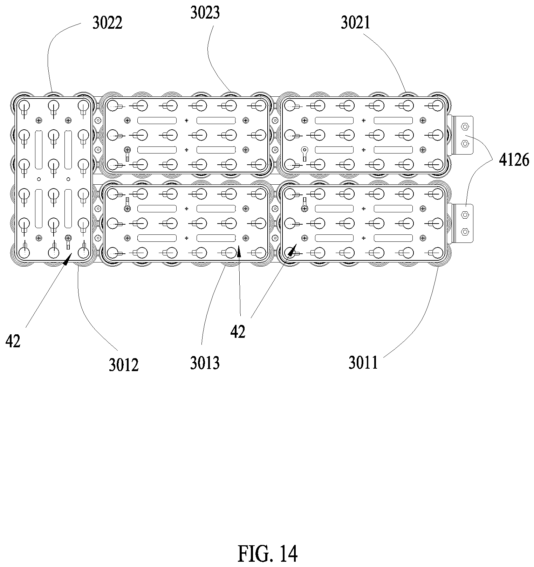

Referring to FIG. 1 and FIG. 2, and FIG.12 to FIG. 14, one of immediate board assembly 42 received in the second limiting portion 2122 at one side of the second spacing area 2123 is cooperatively located at an electrode board assembly 41 and a neighbored immediate board assembly received in the first limiting portion 1120 at the same side of the first spacing area 1124, when the immediate board assembly is projected to the first housing 10. One immediate board assembly 42 received in the crossing limitation portion is cooperatively located at two neighbored immediate board assemblies 42 received in the first limiting portions 1120 at two sides of the first spacing area 1124, when the immediate board assembly is projected to the first housing 10. Each of other immediate board assemblies received in the second limiting portion 2122 at one side of the second spacing area 2123 is cooperatively located at two neighbored second electrode assemblies received in the first limiting portions at the same side of the first spacing area 1124, when the immediate board assembly 42 is projected to the first housing 10.

In use, single batteries 30 of first groups 301 and second groups 302 are electrically connected in series by one of electrode board assembly 41 and the immediate board assemblies located at one side of the first spacing area 1124 and the second spacing area 2123. Batteries 30 of first groups 301 and second groups 302 are electrically connected in series by the other the electrode board assembly 41 and the second electrode assemblies located the other side of the first spacing area 1124 and the second spacing area 2123. The immediate board assembly 42 received in the crossing limiting portion 2121 electrically connects the first crossing group and the second crossing group in series. The anode and the cathode of each single battery are compactly abutted against the first elastic arms or the second elastic arm end electrically connected to the first current collecting board 412 or the second current collecting board by the first elastic member 4131 and the first conductive plate 4132, or by the second elastic member 4231 and the second conductive plate 4232. Two electrode assemblies 41 are respectively severed as the anode and the cathode of the power battery pack 100 for connecting to a load or another power battery pack.

In the embodiment, single batteries and electrode board assembly can be quickly assembled, height of the power battery pack can be efficiently reduced, and it is shockproof.

In alternative embodiment, the first conductive plate can be integrated formed with the first elastic member. In alternative embodiment, the first conductive plate can be omitted, one end of the first fuse is directly soldered to the first elastic member. In alternative embodiment, the first conductive plate and the first fuse can be omitted, the first elastic member can be directly electrically connected to the first current board.

In alternative embodiment, the second conductive plate can be integrated formed with the second elastic member. In alternative embodiment, the second conductive plate can be omitted, one end of the second fuse is directly soldered to the first elastic member. In alternative embodiment, the second conductive plate and the second fuse can be omitted, the second elastic member can be directly electrically connected to the first current board.

In alternative embodiment, the first lateral wall can be omitted. The first sidewall can be omitted. The second sidewall can be omitted. The first lateral wall can be omitted.

In alternative embodiment, the first slots and the second slots can be omitted.

It will be apparent to those skilled in the art that various modification and variations can be made in the multicolor illumination device and related method of the present invention without departing from the scope of the invention. Thus, it is intended that the present invention cover modifications and variations that come within the scope of the appended claims.

## Claims

1. A power battery pack (100), comprising:
a first housing (10) comprising a first main portion (11) having a first fixing surface (111) and a first connection surface (112); a number of first receiving portions (1110) extending upwardly from the first fixing surface (111); the first main portion (11) defining a number of first through holes (1111), each first receiving portion (1110) surrounding a respective first through hole (1111); a number of first limiting portions (1120) extending upwardly from the first connection surface (112) and each first limiting portion (1120) surrounding a part of first through holes (1111);
a second housing (20) comprising a second main portion (21) having a second fixing surface (211) and a second connection surface (212); a number of second receiving portions (2110) extending upwardly from the second fixing surface (211); the second main portion (21) defining a number of second through holes (2111), each second receiving portion (2110) surrounding a respective second through hole (2111); a number of second limiting portions (2120) extending upwardly from the second connection surface (212) and each second limiting portion (2120) surrounding a part of second through holes (2111);
a number of single batteries (30), each single battery (30) comprising an anode (31) and a cathode (32) at two ends; two ends of each single battery (30) being received in a first receiving portion (1110) and a respective second receiving portion (2110); and
a current collecting board assembly (40) comprising two electrode board assemblies (41) respectively received in a first limiting portion (1120) and a number of intermediate board assemblies (42), each intermediate board assemblies (42) being received in a first limiting portion (1120) or a second limiting portion (2120);
wherein the electrode board assembly (41) comprises a first mounting plate (411), a first current collecting board (412) mounted on the first mounting plate (411), and a number of first conductive components (413); the first conductive component (413) comprises a first elastic member (4131) electrically connected to the first current collecting board (412); the first elastic member (4131) comprises a number of first elastic arms (4135) extending into the first though hole (1111) and abut against one end of the single battery (30); wherein the intermediate board assembly (42) comprises a second mounting plate (421), a second current collecting board (422) mounted on the second mounting plate (421), and a number of second conductive components (423); the second conductive component (423) comprises a second elastic member (4231) electrically connected to the second current collecting board (422); the second elastic member (4231) comprises a number of second elastic arms (4235) extending into the first through hole (1111) or the second though hole (2111) and abut against one end of the single battery (30);
wherein the first mounting plate (411) comprises a first main body (4111), the first main body (4111) comprises a first clamping surface (4113) and a first mounting surface (4114) opposite to the first clamping surface (4113); the first main body (4111) defines a number of first passing holes (4115) passing through the first clamping surface (4113) and the first mounting surface (4114); the first current collecting plate (412) defines a number of first via holes (4121); a number of first limitation protrusions (4120) extend from the first clamping surface (4113), each first limitation protrusion (4120) surrounds a respective first passing hole (4115); each first via hole (4121) corresponds the first passing hole (4115); each first conductive component (413) is received in a respective first protrusion portion (4120);
wherein the first conductive component (413) further comprises a first conductive plate (4132) and a first fuse (4133); the first conductive plate (4132) is received in the first limitation protrusion (4120) and attached to the first clamping surface (4113) around the first passing hole (4115); the first elastic member (4131) comprises a first connecting portion (4134) electrically connecting with the first conductive plate (4132), the first elastic arms (4135) of each first elastic member (4131) extend from one side of the first connecting portion (4134); one end of the first fuse (4133) passes through the first passing hole (4115) and the first via hole (4121) and is soldered to the first conductive plate (4132) and the other end is soldered to the first current collecting board (412).

2. The power battery pack of claim 1, wherein the first through hole (1111) and the first passing hole (4115) are circular and coaxial with each other; the first via hole (4121) comprises a first wide part (4124) and a first narrow part (4125); the first wide part (4124) is circular and coaxial with the first passing hole (4115), and a diameter of the first wide part (4124) corresponds to the diameter of the first passing hole (4115); the first fuse (4133) passes the first wide part (4124) of the first via hole (4121) and separately faces the first narrow part (4125).

3. The power battery pack of claim 1, wherein the first limitation protrusion (4120) is hollow cylindrical and coaxial with the first passing hole (4115); an inner diameter of the first limitation protrusion (4120) is greater than the diameter of the first passing hole (4115); the first conductive plate (4132) is circular and the first connecting portion (4134) is an annular ring; the first connecting portion (4134) is coaxial with the first conductive plate (4132) and soldered to the first conductive plate (4132); the first elastic arms (4135) extend from an inner side of the annular ring, a diameter of the conductive plate (4132) corresponds to an outer diameter of the first connecting portion (4134), a distal end of each first elastic arm (4135) extends toward a center axis of the annular ring; the outer diameter of the first connecting portion (4134) corresponds to the inner diameter of the first limitation protrusion (4120).

4. The power battery pack of claim 1, wherein the first mounting plate (411) further comprises a first lateral wall (4112) defining an opening (4118); a contact portion (4119) extends from the first main body (4111) and the contact portion (4119) passes the opening (4118); the first current collecting board (412) further comprises an ear portion (4126) extending and bending from one side of the first current collecting board (412); the electrode ear (4126) passes the opening (4118) and attaches to the contact portion (4119).

5. The power battery pack of claim 4, wherein first limiting portion (1120) comprises an anode limiting portion (1121), a cathode limiting portion (1122), and a number of first intermediate limiting portions (1123); the first connection surface (112) comprises a first spacing area (1124) in the middle, the anode limiting portion (1121) and the cathode limiting portion (1122) are distributed at two sides of the first spacing surface (1124), and the first intermediate limiting portions (1123) are also distributed at two sides of the first spacing surface (1124); the anode limiting portion (1121) and cathode limiting portion (1122) respectively receives an electrode board assembly (41); each first intermediate limiting portion (1123) receives an intermediate board assembly (42); the first lateral wall (4112) contacts to an inner surface of the anode limiting portion (1121) or the cathode limiting portion (1122).

6. The power battery pack of claim 5, wherein the first housing (10) comprises a first sidewall (12) surrounding the first connection surface (112) and the first limiting portion (1120); the first sidewall (12) defines two first slot (1201), the anode limiting portion (1121) and the cathode limiting portion (1122) respectively defines a second slot (1125), each second slot (1125) correspond to a first slot (1201), the electrode ear (4126) passes through the first slot (1201) and the second slot (1125) and is outside the first sidewall.

7. The power battery pack of claim 6, wherein the second mounting plate (421) comprises a second main body (4211), the second main body (4211) comprises a second clamping surface (4213) and a second mounting surface (4214) opposite to the second clamping surface (4213); the second main body (4211) defines a number of second passing holes (4215) passing through the second clamping surface (4213) and the second mounting surface (4214); the second current collecting plate (422) defines a number of second via holes (4221); a number of second limitation protrusions (4218) extend from the second clamping surface (4213), each second limitation protrusion (4218) surrounds a respective second passing hole (4215); each second via hole (4221) corresponds to the second passing hole (4215); each second conductive component (423) is received in a respective second limitation protrusion portion (4218).

8. The power battery pack of claim 7, wherein the second conductive component (423) further comprises a second conductive plate (4232) and a second fuse (4233); the conductive plate (4232) is received in the second limitation protrusion (4218) and attached to the second clamping surface (4213) around the second passing hole (4215); the second elastic member (4231) comprises a second connecting portion (4234) electrically contacting with the second conductive plate (4232), the second elastic arms (4235) extend from one side of the second connecting portion (4234); one end of the second fuse (4233) passes through the second passing hole (4215) and the second via hole (4221) and is soldered to the second conductive plate (4232) and the other end is soldered to the second current collecting board (422).

9. The power battery pack of claim 8, wherein the second through hole (2111) and the second passing hole (4215) are circular and coaxial with each other; the second via hole (4221) comprises a second wide part (4224) and a second narrow part (4225); the second wide part (4224) is circular and coaxial with the second passing hole (4215), and a diameter of the second wide part (4224) corresponds to the diameter of the second passing hole (4215); the second fuse (4233) passes the second wide part (4224) of the second via hole (4221) and separately faces the second narrow part (4225).

10. The power battery pack of claim 8, wherein the second limitation protrusion (4218) is hollow cylindrical and coaxial with the second passing hole (4215); an inner diameter of the second limitation protrusion (4218) is greater than the diameter of the second passing hole (4215); the second conductive plate (4232) is circular; the second connecting portion (4234) is coaxial with the conductive plate and soldered to the second conductive plate; the second connecting portion (4234) is an annular ring, a diameter of the second conductive plate (4232) corresponds to an outer diameter of the second connecting portion (4234), the second elastic arms (4235) extend from an inner side of the annular ring and a distal end of each second elastic arm (4235) extends toward a center axis of the annular ring; the outer diameter of the second connecting portion (4234) corresponds to the inner diameter of the second limitation protrusion (4218).

11. The power battery pack of claim 8, wherein second limiting portion (2120) comprises a crossing limiting portion (2121) and a number of second intermediate limiting portions (2122); the second connection surface (212) comprises a second spacing area (2123) in the middle of the second connection surface (212), the crossing limiting portion (2121) crosses the second spacing area (2123), and the second intermediate limiting portions (2122) are distributed at two sides of the second spacing area (2123); each second intermediate limiting portion (2122) receives an intermediate board assembly (42); the second housing (20) further comprises a second sidewall (22) extending around the second main portion (21), the second mounting plate (421) further comprises a second lateral wall (4212), the second lateral wall (4212) contacts to an inner surface of the crossing limiting portion (2121) or the second intermediate portion (2122).

12. The power battery pack of claim 11, wherein the first housing (10) further comprise a first supporting portion (123) extending from one end of the first main portion (11) and a pair of first protrusions (124) extending form another end of the first main portion (11); the first supporting portion (123) defines a pair of first screw holes (1231), each first protrusions (124) defines a second screw hole (1241); the second housing (20) further comprises a second supporting portion (223) extending from one end of the second main portion (21) and a pair of second protrusions (224) extending form another end of the second main portion (21); the second supporting portion (223) defines a pair of third screw holes (2231); each second protrusions (224) defines a fourth screw hole (2241); the first housing (10) and the second housing (20) are mounted together by bolts passing through the first screw holes (1231) and corresponding the third screw holes (2231); and passing the second screw holes (1241) and corresponding fourth screw holes (2241).

13. A current collecting board assembly (40), comprising,
two electrode board assemblies (41); and
a number of intermediate board assemblies (42);
wherein the electrode board assembly (41) comprises a first mounting plate (411), a first current collecting board (412) mounted on the first mounting plate (411), and a number of first conductive components (413); the first conductive component (413) comprises a first elastic member (4131) electrically connected to the first current collecting board (412); the first elastic member (4131) comprises a number of first elastic arms (4135); the intermediate board assembly (42) comprises a second mounting plate (421), a second current collecting board (422) mounted on the second mounting plate (421), and a number of second conductive components (423); the second conductive component (423) comprises a second elastic member (4231) electrically connected to the second current collecting board (422); the second elastic member (4231) comprises a number of second elastic arms (4235);
wherein the first mounting plate (411) comprises a first main body (4111), the first main body (4111) comprises a first clamping surface (4113) and a first mounting surface (4114) opposite to the first clamping surface (4113); the first main body (4111) defines a number of first passing holes (4115) passing through the first clamping surface (4113) and the first mounting surface (4114); the first current collecting plate (412) defines a number of first via holes (4121); a number of first limitation protrusions (4120) extend from the first clamping surface (4113), each first limitation protrusion (4120) surrounds a respective first passing hole (4115); each first via hole (4121) corresponds the first passing hole (4115); each first conductive component (413) is received in a respective first protrusion portion (4120), the first elastic arms (4135) pass through the first passing hole (4115)
wherein the first conductive component (413) further comprises a first conductive plate (4132) and a first fuse (4133); the first conductive plate (4132) is received in the first limitation protrusion (4120) and attached to the first clamping surface (4113) around the first passing hole (4115); the first elastic member (4131) comprises a first connecting portion (4134) electrically contacting with the first conductive plate (4132), the first elastic arms (4135) extend from one side of the first connecting portion (4134); one end of the first fuse (4133) passes through the first passing hole (4115) and the first via hole (4121) and is soldered to the first conductive plate (4132) and the other end is soldered to the first current collecting board (412).

14. The current collecting board assembly of claim 13, wherein the first via hole (4121) comprises a first wide part (4124) and a first narrow part (4125); the first wide part (4124) is circular and coaxial with the first passing hole (4115); the first fuse (4133) passes the first wide part (4124) of the first via hole (4121) and separately faces the first narrow part (4125); the first limitation protrusion (4120) is hollow cylindrical and coaxial with the first passing hole (4115); an inner diameter of the first limitation protrusion (4120) is greater than the diameter of the first passing hole (4115); the first conductive plate (4132) is circular; the first connecting portion (4134) is coaxial with the first conductive plate (4132) and soldered to the first conductive plate (4132); the first connecting portion (4134) is an annular ring, a diameter of the conductive plate (4132) corresponds to an outer diameter of the first connecting portion (4134), the first elastic arms (4135) extend from an inner side of the annular ring and a distal end of each first elastic arm extends toward a center axis of the annular ring; the outer diameter of the first connecting portion (4134) corresponds to the inner diameter of the first limitation protrusion (4120).

15. The current collecting board assembly of claim 13, wherein the first mounting plate (411) further comprises a first lateral wall (4112) defining an opening (4118); a contact portion (4119) extends from the first main body (4111) and the contact portion (4119) passes the opening (4118); the first current collecting board (412) further comprises an ear portion (4126) extending and bending from one side of the first current collecting board (412); the electrode ear (4126) passes the opening (4118) and attaches to the contact portion (4119).

16. The current collecting board assembly of claim 13, wherein he second mounting plate (421) comprises a second main body (4211), the second main body (4211) comprises a second clamping surface (4213) and a second mounting surface (4214) opposite to the second clamping surface (4213); the second main body (4211) defines a number of second passing holes (4215) passing through the second clamping surface (4213) and the second mounting surface (4214); the second current collecting plate (422) defines a number of second via holes (4221); a number of second limitation protrusions (4218) extend from the second clamping surface (4213), each second limitation protrusion (4218) surrounds a respective second passing hole (4215); each second via hole (4221) corresponds to the second passing hole (4215); each second conductive component (423) is received in a respective second limitation protrusion portion (4218).

17. The current collecting board assembly of claim 16, wherein the second conductive component (423) further comprises a second conductive plate (4232) and a second fuse (4233); the conductive plate (4232) is received in the second limitation protrusion (4218) and attached to the second clamping surface (4213) around the second passing hole (4215); the second elastic member (4231) comprises a second connecting portion (4234) electrically contacting with the second conductive plate (4232), the second elastic arms (4235) extend from one side of the second connecting portion (4234); one end of the second fuse (4233) passes through the second passing hole (4215) and the second via hole (4221) and is soldered to the second conductive plate (4232) and the other end is soldered to the second current collecting board (422).

## Patentansprüche

1. Leistungsbatteriepack (100), umfassend:
ein erstes Gehäuse (10), das einen ersten Hauptabschnitt (11) mit einer ersten Befestigungsfläche (111) und einer ersten Verbindungsfläche (112) umfasst, wobei sich mehrere erste Aufnahmeabschnitte (1110) von der ersten Befestigungsfläche (111) aus aufwärts erstrecken, wobei der erste Hauptabschnitt (11) mehrere erste Durchgangsöffnungen (1111) definiert, wobei jeder erste Aufnahmeabschnitt (1110) eine jeweilige erste Durchgangsöffnung (1111) umgibt und wobei sich mehrere erste Begrenzungsabschnitte (1120) von der ersten Verbindungsfläche (112) aus aufwärts erstrecken und jeder erste Begrenzungsabschnitt (1120) einen Teil der ersten Durchgangsöffnungen (1111) umgibt,
ein zweites Gehäuse (20), das einen zweiten Hauptabschnitt (21) mit einer zweiten Befestigungsfläche (211) und einer zweiten Verbindungsfläche (212) umfasst, wobei sich mehrere zweite Aufnahmeabschnitte (2110) von der zweiten Befestigungsfläche (211) aus aufwärts erstrecken, wobei der zweite Hauptabschnitt (21) mehrere zweite Durchgangsöffnungen (2111) definiert, wobei jeder zweite Aufnahmeabschnitt (2110) eine jeweilige zweite Durchgangsöffnung (2111) umgibt und wobei sich mehrere zweite Begrenzungsabschnitte (2120) von der zweiten Verbindungsfläche (212) aus aufwärts erstrecken und jeder zweite Begrenzungsabschnitt (2120) einen Teil der zweiten Durchgangsöffnungen (2111) umgibt,
mehrere Einzelbatterien (30), wobei jede Einzelbatterie (30) an zwei Enden eine Anode (31) und eine Kathode (32) umfasst, wobei zwei Enden jeder Einzelbatterie (30) in einem ersten Aufnahmeabschnitt (1110) bzw. einem zweiten Aufnahmeabschnitt (2110) aufgenommen sind, und
eine Stromabnehmerplattenanordnung (40), die zwei Elektrodenplattenanordnungen (41), die jeweils in einem ersten Begrenzungsabschnitt (1120) aufgenommen sind, und mehrere Zwischenplattenanordnungen (42) umfasst, wobei jede Zwischenplattenanordnung (42) in einem ersten Begrenzungsabschnitt (1120) oder einem zweiten Begrenzungsabschnitt (2120) aufgenommen ist,
wobei die Elektrodenplattenanordnung (41) eine erste Montageplatte (411), eine auf der ersten Montageplatte (411) montierte erste Stromabnehmerplatte (412) und mehrere erste leitfähige Komponenten (413) umfasst, die erste leitfähige Komponente (413) ein mit der ersten Stromabnehmerplatte (412) elektrisch verbundenes erstes Federelement (4131) umfasst und das erste Federelement (4131) mehrere erste Federarme (4135) umfasst, die sich in die erste Durchgangsöffnung (1111) erstrecken und an einem Ende der Einzelbatterie (30) anliegen, wobei die Zwischenplattenanordnung (42) eine zweite Montageplatte (421), eine auf der zweiten Montageplatte (421) montierte zweite Stromabnehmerplatte (422) und mehrere zweite leitfähige Komponenten (423) umfasst, die zweite leitfähige Komponente (423) ein mit der zweiten Stromabnehmerplatte (422) elektrisch verbundenes zweites Federelement (4231) umfasst und das zweite Federelement (4231) mehrere zweite Federarme (4235) umfasst, die sich in die erste Durchgangsöffnung (1111) oder die zweite Durchgangsöffnung (2111) erstrecken und an einem Ende der Einzelbatterie (30) anliegen,
wobei die erste Montageplatte (411) einen ersten Hauptkörper (4111) umfasst, der erste Hauptkörper (4111) eine erste Klemmfläche (4113) und eine der ersten Klemmfläche (4113) entgegengesetzte erste Montagefläche (4114) umfasst, der erste Hauptkörper (4111) mehrere durch die erste Klemmfläche (4113) und die erste Montagefläche (4114) hindurchtretende erste Durchtrittsöffnungen (4115) definiert, die erste Stromabnehmerplatte (412) mehrere erste Kontaktierungsöffnungen (4121) definiert, mehrere erste Begrenzungsvorsprünge (4120) sich von der ersten Klemmfläche (4113) aus erstrecken, jeder erste Begrenzungsvorsprung (4120) eine jeweilige erste Durchtrittsöffnung (4115) umgibt, jede erste Kontaktierungsöffnung (4121) der ersten Durchtrittsöffnung (4115) entspricht und jede erste leitfähige Komponente (413) in einem jeweiligen ersten Vorsprungabschnitt (4120) aufgenommen ist,
wobei die erste leitfähige Komponente (413) ferner eine erste leitfähige Platte (4132) und eine erste Sicherung (4133) umfasst, die erste leitfähige Platte (4132) in dem ersten Begrenzungsvorsprung (4120) aufgenommen und an der ersten Klemmfläche (4113) um die erste Durchtrittsöffnung (4115) herum angebracht ist, das erste Federelement (4131) einen mit der ersten leitfähigen Platte (4132) elektrisch verbundenen ersten Verbindungsabschnitt (4134) umfasst, die ersten Federarme (4135) jedes ersten Federelements (4131) sich von einer Seite des ersten Verbindungsabschnitts (4134) aus erstrecken, ein Ende der ersten Sicherung (4133) durch die erste Durchtrittsöffnung (4115) und die erste Kontaktierungsöffnung (4121) hindurchtritt und mit der ersten leitfähigen Platte (4132) verlötet ist und das andere Ende mit der ersten Stromabnehmerplatte (412) verlötet ist.

2. Leistungsbatteriepack nach Anspruch 1, wobei die erste Durchgangsöffnung (1111) und die erste Durchtrittsöffnung (4115) kreisförmig und koaxial zueinander sind, die erste Kontaktierungsöffnung (4121) einen ersten breiten Teil (4124) und einen ersten schmalen Teil (4125) umfasst, der erste breite Teil (4124) kreisförmig und koaxial mit der ersten Durchtrittsöffnung (4115) ist und ein Durchmesser des ersten breiten Teils (4124) dem Durchmesser der ersten Durchtrittsöffnung (4115) entspricht und die erste Sicherung (4133) durch den ersten breiten Teil (4124) der ersten Kontaktierungsöffnung (4121) hindurchtritt und dem ersten schmalen Teil (4125) freistehend gegenüberliegt.

3. Leistungsbatteriepack nach Anspruch 1, wobei der erste Begrenzungsvorsprung (4120) hohlzylindrisch und koaxial mit der ersten Durchtrittsöffnung (4115) ist, ein Innendurchmesser des ersten Begrenzungsvorsprungs (4120) größer ist als der Durchmesser der ersten Durchtrittsöffnung (4115), die erste leitfähige Platte (4132) kreisförmig und der erste Verbindungsabschnitt (4134) ein Kreisring ist, der erste Verbindungsabschnitt (4134) koaxial mit der ersten leitfähigen Platte (4132) ist und mit der ersten leitfähigen Platte (4132) verlötet ist, die ersten Federarme (4135) sich von einer Innenseite des Kreisrings aus erstrecken, ein Durchmesser der leitfähigen Platte (4132) einem Außendurchmesser des ersten Verbindungsabschnitts (4134) entspricht, ein distales Ende jedes ersten Federarms (4135) sich in Richtung einer Mittelachse des Kreisrings erstreckt und der Außendurchmesser des ersten Verbindungsabschnitts (4134) dem Innendurchmesser des ersten Begrenzungsvorsprungs (4120) entspricht.

4. Leistungsbatteriepack nach Anspruch 1, wobei die erste Montageplatte (411) ferner eine erste seitliche Wand (4112) umfasst, die eine Öffnung (4118) definiert, ein Kontaktabschnitt (4119) sich von dem ersten Hauptkörper (4111) aus erstreckt und der Kontaktabschnitt (4119) durch die Öffnung (4118) hindurchtritt, die erste Stromabnehmerplatte (412) ferner einen sich von einer Seite der ersten Stromabnehmerplatte (412) aus abgewinkelt erstreckenden Laschenabschnitt (4126) umfasst und die Elektrodenlasche (4126) durch die Öffnung (4118) hindurchtritt und sich mit dem Kontaktabschnitt (4119) verbindet.

5. Leistungsbatteriepack nach Anspruch 4, wobei der erste Begrenzungsabschnitt (1120) einen Anodenbegrenzungsabschnitt (1121), einen Kathodenbegrenzungsabschnitt (1122) und mehrere erste Zwischenbegrenzungsabschnitte (1123) umfasst, die erste Verbindungsfläche (112) in der Mitte einen ersten Beabstandungsbereich (1124) umfasst, der Anodenbegrenzungsabschnitt (1121) und der Kathodenbegrenzungsabschnitt (1122) auf zwei Seiten der ersten Beabstandungsfläche (1124) verteilt sind und die ersten Zwischenbegrenzungsabschnitte (1123) ebenfalls auf zwei Seiten der ersten Beabstandungsfläche (1124) verteilt sind, der Anodenbegrenzungsabschnitt (1121) und der Kathodenbegrenzungsabschnitt (1122) jeweils eine Elektrodenplattenanordnung (41) aufnehmen, jeder erste Zwischenbegrenzungsabschnitt (1123) eine Zwischenplattenanordung (42) aufnimmt und die erste seitliche Wand (4112) eine Innenfläche des Anodenbegrenzungsabschnitts (1121) oder des Kathodenbegrenzungsabschnitts (1122) kontaktiert.

6. Leistungsbatteriepack nach Anspruch 5, wobei das erste Gehäuse (10) eine erste Seitenwand (12) umfasst, welche die erste Verbindungsfläche (112) und den ersten Begrenzungsabschnitt (1120) umgibt, die erste Seitenwand (12) zwei erste Schächte (1201) definiert, der Anodenbegrenzungsabschnitt (1121) und der Kathodenbegrenzungsabschnitt (1122) jeweils einen zweiten Schacht (1125) definieren, jeder zweite Schacht (1125) einem ersten Schacht (1201) entspricht und die Elektrodenlasche (4126) durch den ersten Schacht (1201) und den zweiten Schacht (1125) hindurchtritt und sich außerhalb der ersten Seitenwand befindet.

7. Leistungsbatteriepack nach Anspruch 6, wobei die zweite Montageplatte (421) einen zweiten Hauptkörper (4211) umfasst, der zweite Hauptkörper (4211) eine zweite Klemmfläche (4213) und eine der zweiten Klemmfläche (4213) entgegengesetzte zweite Montagefläche (4214) umfasst, der zweite Hauptkörper (4211) mehrere durch die zweite Klemmfläche (4213) und die zweite Montagefläche (4214) hindurchtretende zweite Durchtrittsöffnungen (4215) definiert, die zweite Stromabnehmerplatte (422) mehrere zweite Kontaktierungsöffnungen (4221) definiert, mehrere zweite Begrenzungsvorsprünge (4218) sich von der zweiten Klemmfläche (4213) aus erstrecken, jeder zweite Begrenzungsvorsprung (4218) eine jeweilige zweite Durchtrittsöffnung (4215) umgibt, jede zweite Kontaktierungsöffnung (4221) der zweiten Durchtrittsöffnung (4215) entspricht und jede zweite leitfähige Komponente (423) in einem jeweiligen zweiten Begrenzungsvorsprungabschnitt (4218) aufgenommen ist.

8. Leistungsbatteriepack nach Anspruch 7, wobei die zweite leitfähige Komponente (423) ferner eine zweite leitfähige Platte (4232) und eine zweite Sicherung (4233) umfasst, die leitfähige Platte (4232) in dem zweiten Begrenzungsvorsprung (4218) aufgenommen und an der zweiten Klemmfläche (4213) um die zweite Durchtrittsöffnung (4215) herum angebracht ist, das zweite Federelement (4231) einen die zweite leitfähige Platte (4232) elektrisch kontaktierenden zweiten Verbindungsabschnitt (4234) umfasst, die zweiten Federarme (4235) sich von einer Seite des zweiten Verbindungsabschnitts (4234) aus erstrecken, ein Ende der zweiten Sicherung (4233) durch die zweite Durchtrittsöffnung (4215) und die zweite Kontaktierungsöffnung (4221) hindurchtritt und mit der zweiten leitfähigen Platte (4232) verlötet ist und das andere Ende mit der zweiten Stromabnehmerplatte (422) verlötet ist.

9. Leistungsbatteriepack nach Anspruch 8, wobei die zweite Durchgangsöffnung (2111) und die zweite Durchtrittsöffnung (4215) kreisförmig und koaxial zueinander sind, die zweite Kontaktierungsöffnung (4221) einen zweiten breiten Teil (4224) und einen zweiten schmalen Teil (4225) umfasst, der zweite breite Teil (4224) kreisförmig und koaxial mit der zweiten Durchtrittsöffnung (4215) ist und ein Durchmesser des zweiten breiten Teils (4224) dem Durchmesser der zweiten Durchtrittsöffnung (4215) entspricht und die zweite Sicherung (4233) durch den zweiten breiten Teil (4224) der zweiten Kontaktierungsöffnung (4221) hindurchtritt und dem zweiten schmalen Teil (4225) freistehend gegenüberliegt.

10. Leistungsbatteriepack nach Anspruch 8, wobei der zweite Begrenzungsvorsprung (4218) hohlzylindrisch und koaxial mit der zweiten Durchtrittsöffnung (4215) ist, ein Innendurchmesser des zweiten Begrenzungsvorsprungs (4218) größer ist als der Durchmesser der zweiten Durchtrittsöffnung (4215), die zweite leitfähige Platte (4232) kreisförmig ist, der zweite Verbindungsabschnitt (4234) koaxial mit der leitfähigen Platte ist und mit der zweiten leitfähigen Platte verlötet ist, der zweite Verbindungsabschnitt (4234) ein Kreisring ist, ein Durchmesser der zweiten leitfähigen Platte (4232) einem Außendurchmesser des zweiten Verbindungsabschnitts (4234) entspricht, die zweiten Federarme (4235) sich von einer Innenseite des Kreisrings aus erstrecken und ein distales Ende jedes zweiten Federarms (4235) sich in Richtung einer Mittelachse des Kreisrings erstreckt und der Außendurchmesser des zweiten Verbindungsabschnitts (4234) dem Innendurchmesser des zweiten Begrenzungsvorsprungs (4218) entspricht.

11. Leistungsbatteriepack nach Anspruch 8, wobei der zweite Begrenzungsabschnitt (2120) einen kreuzenden Begrenzungsabschnitt (2121) und mehrere zweite Zwischenbegrenzungsabschnitte (2122) umfasst, die zweite Verbindungsfläche (212) einen zweiten Beabstandungsbereich (2123) in der Mitte der zweiten Verbindungsfläche umfasst, der kreuzende Begrenzungsabschnitt (2121) den zweiten Beabstandungsbereich (2123) kreuzt und die zweiten Zwischenbegrenzungsabschnitte (2122) auf zwei Seiten des zweiten Beabstandungsbereichs (2123) verteilt sind, jeder zweite Zwischenbegrenzungsabschnitt (2122) eine Zwischenplattenanordnung (42) aufnimmt, das zweite Gehäuse (20) ferner eine sich um den zweiten Hauptabschnitt (21) herum erstreckende zweite Seitenwand (22) umfasst, die zweite Montageplatte (421) ferner eine zweite seitliche Wand (4212) umfasst und die zweite seitliche Wand (4212) eine Innenfläche des kreuzenden Begrenzungsabschnitts (2121) oder des zweiten Zwischenabschnitts (2122) kontaktiert.

12. Leistungsbatteriepack nach Anspruch 11, wobei das erste Gehäuse (10) ferner einen sich von einem Ende des ersten Hauptabschnitts (11) aus erstreckenden ersten Stützabschnitt (123) und ein Paar sich von einem anderen Ende des ersten Hauptabschnitts (11) aus erstreckender erster Vorsprünge (124) umfasst, der erste Stützabschnitt (123) ein Paar erster Schraublöcher (1231) definiert, jeder erste Vorsprung (124) ein zweites Schraubloch (1241) definiert, das zweite Gehäuse (20) ferner einen sich von einem Ende des zweiten Hauptabschnitts (21) aus erstreckenden zweiten Stützabschnitt (223) und ein Paar sich von einem anderen Ende des zweiten Hauptabschnitts (21) aus erstreckender zweiter Vorsprünge (224) umfasst, der zweite Stützabschnitt (223) ein Paar dritter Schraublöcher (2231) definiert, jeder zweite Vorsprung (224) ein viertes Schraubloch (2241) definiert und das erste Gehäuse (10) und das zweite Gehäuse (20) durch Schraubbolzen zusammenmontiert sind, die durch die ersten Schraublöcher (1231) und die entsprechenden dritten Schraublöcher (2231) hindurchtreten und durch die zweiten Schraublöcher (1241) und die entsprechenden vierten Schraublöcher (2241) hindurchtreten.

13. Stromabnehmerplattenanordnung (40), umfassend
zwei Elektrodenplattenanordnungen (41) und
mehrere Zwischenplattenanordnungen (42),
wobei die Elektrodenplattenanordnung (41) eine erste Montageplatte (411), eine auf der ersten Montageplatte (411) montierte erste Stromabnehmerplatte (412) und mehrere erste leitfähige Komponenten (413) umfasst, die erste leitfähige Komponente (413) ein mit der ersten Stromabnehmerplatte (412) elektrisch verbundenes erstes Federelement (4131) umfasst, das erste Federelement (4131) mehrere erste Federarme (4135) umfasst, die Zwischenplattenanordnung (42) eine zweite Montageplatte (421), eine auf der zweiten Montageplatte (421) montierte zweite Stromabnehmerplatte (422) und mehrere zweite leitfähige Komponenten (423) umfasst, die zweite leitfähige Komponente (423) ein mit der zweiten Stromabnehmerplatte (422) elektrisch verbundenes zweites Federelement (4231) umfasst und das zweite Federelement (4231) mehrere zweite Federarme (4235) umfasst,
wobei die erste Montageplatte (411) einen ersten Hauptkörper (4111) umfasst, der erste Hauptkörper (4111) eine erste Klemmfläche (4113) und eine der ersten Klemmfläche (4113) entgegengesetzte erste Montagefläche (4114) umfasst, der erste Hauptkörper (4111) mehrere durch die erste Klemmfläche (4113) und die erste Montagefläche (4114) hindurchtretende erste Durchtrittsöffnungen (4115) definiert, die erste Stromabnehmerplatte (412) mehrere erste Kontaktierungsöffnungen (4121) definiert, mehrere erste Begrenzungsvorsprünge (4120) sich von der ersten Klemmfläche (4113) aus erstrecken, jeder erste Begrenzungsvorsprung (4120) eine jeweilige erste Durchtrittsöffnung (4115) umgibt, jede erste Kontaktierungsöffnung (4121) der ersten Durchtrittsöffnung (4115) entspricht, jede erste leitfähige Komponente (413) in einem jeweiligen ersten Vorsprungabschnitt (4120) aufgenommen ist und die ersten Federarme (4135) durch die erste Durchtrittsöffnung (4115) hindurchtreten,
wobei die erste leitfähige Komponente (413) ferner eine erste leitfähige Platte (4132) und eine erste Sicherung (4133) umfasst, die erste leitfähige Platte (4132) in dem ersten Begrenzungsvorsprung (4120) aufgenommen und an der ersten Klemmfläche (4113) um die erste Durchtrittsöffnung (4115) herum angebracht ist, das erste Federelement (4131) einen die erste leitfähige Platte (4132) elektrisch kontaktierenden ersten Verbindungsabschnitt (4134) umfasst, die ersten Federarme (4135) sich von einer Seite des ersten Verbindungsabschnitts (4134) aus erstrecken, ein Ende der ersten Sicherung (4133) durch die erste Durchtrittsöffnung (4115) und die erste Kontaktierungsöffnung (4121) hindurchtritt und mit der ersten leitfähigen Platte (4132) verlötet ist und das andere Ende mit der ersten Stromabnehmerplatte (412) verlötet ist.

14. Stromabnehmerplattenanordnung nach Anspruch 13, wobei die erste Kontaktierungsöffnung (4121) einen ersten breiten Teil (4124) und einen ersten schmalen Teil (4125) umfasst, der erste breite Teil (4124) kreisförmig und koaxial mit der ersten Durchtrittsöffnung (4115) ist, die erste Sicherung (4133) durch den ersten breiten Teil (4124) der ersten Kontaktierungsöffnung (4121) hindurchtritt und dem ersten schmalen Teil (4125) freistehend gegenüberliegt, der erste Begrenzungsvorsprung (4120) hohlzylindrisch und koaxial mit der ersten Durchtrittsöffnung (4115) ist, ein Innendurchmesser des ersten Begrenzungsvorsprungs (4120) größer ist als der Durchmesser der ersten Durchtrittsöffnung (4115), die erste leitfähige Platte (4132) kreisförmig ist, der erste Verbindungsabschnitt (4134) koaxial mit der ersten leitfähigen Platte (4132) ist und mit der ersten leitfähigen Platte (4132) verlötet ist, der erste Verbindungsabschnitt (4134) ein Kreisring ist, ein Durchmesser der leitfähigen Platte (4132) einem Außendurchmesser des ersten Verbindungsabschnitts (4134) entspricht, die ersten Federarme (4135) sich von einer Innenseite des Kreisrings aus erstrecken und ein distales Ende jedes ersten Federarms sich in Richtung einer Mittelachse des Kreisrings erstreckt und der Außendurchmesser des ersten Verbindungsabschnitts (4134) dem Innendurchmesser des ersten Begrenzungsvorsprungs (4120) entspricht.

15. Stromabnehmerplattenanordnung nach Anspruch 13, wobei die erste Montageplatte (411) ferner eine erste seitliche Wand (4112) umfasst, die eine Öffnung (4118) definiert, ein Kontaktabschnitt (4119) sich von dem ersten Hauptkörper (4111) aus erstreckt und der Kontaktabschnitt (4119) durch die Öffnung (4118) hindurchtritt, die erste Stromabnehmerplatte (412) ferner einen sich von einer Seite der ersten Stromabnehmerplatte (412) aus abgewinkelt erstreckenden Laschenabschnitt (4126) umfasst und die Elektrodenlasche (4126) durch die Öffnung (4118) hindurchtritt und sich mit dem Kontaktabschnitt (4119) verbindet.

16. Stromabnehmerplattenanordnung nach Anspruch 13, wobei die zweite Montageplatte (421) einen zweiten Hauptkörper (4211) umfasst, der zweite Hauptkörper (4211) eine zweite Klemmfläche (4213) und eine der zweiten Klemmfläche (4213) entgegengesetzte zweite Montagefläche (4214) umfasst, der zweite Hauptkörper (4211) mehrere durch die zweite Klemmfläche (4213) und die zweite Montagefläche (4214) hindurchtretende zweite Durchtrittsöffnungen (4215) definiert, die zweite Stromabnehmerplatte (422) mehrere zweite Kontaktierungsöffnungen (4221) definiert, mehrere zweite Begrenzungsvorsprünge (4218) sich von der zweiten Klemmfläche (4213) aus erstrecken, jeder zweite Begrenzungsvorsprung (4218) eine jeweilige zweite Durchtrittsöffnung (4215) umgibt, jede zweite Kontaktierungsöffnung (4221) der zweiten Durchtrittsöffnung (4215) entspricht und jede zweite leitfähige Komponente (423) in einem jeweiligen zweiten Begrenzungsvorsprungabschnitt (4218) aufgenommen ist.

17. Stromabnehmerplattenanordnung nach Anspruch 16, wobei die zweite leitfähige Komponente (423) ferner eine zweite leitfähige Platte (4232) und eine zweite Sicherung (4233) umfasst, die leitfähige Platte (4232) in dem zweiten Begrenzungsvorsprung (4218) aufgenommen und an der zweiten Klemmfläche (4213) um die zweite Durchtrittsöffnung (4215) herum angebracht ist, das zweite Federelement (4231) einen die zweite leitfähige Platte (4232) elektrisch kontaktierenden zweiten Verbindungsabschnitt (4234) umfasst, die zweiten Federarme (4235) sich von einer Seite des zweiten Verbindungsabschnitts (4234) aus erstrecken, ein Ende der zweiten Sicherung (4233) durch die zweite Durchtrittsöffnung (4215) und die zweite Kontaktierungsöffnung (4221) hindurchtritt und mit der zweiten leitfähigen Platte (4232) verlötet ist und das andere Ende mit der zweiten Stromabnehmerplatte (422) verlötet ist.

## Revendications

1. Bloc batterie de puissance (100), comprenant :
un premier boîtier (10) comprenant une première partie principale (11) comportant une première surface de fixation (111) et une première surface de connexion (112) ; un certain nombre de premières parties réceptrices (1110) s'étendant vers le haut depuis la première surface de fixation (111) ; la première partie principale (11) définissant une certain nombre de premiers trous traversants (1111), chaque première partie réceptrice (1110) entourant un premier trou traversant respectif (1111) ; un certain nombre de premières parties limitantes (1120) s'étendant vers le haut depuis la première surface de connexion (112) et chaque première partie limitante (1120) entourant une partie des premiers trous traversants (1111) ;
un second boîtier (20) comprenant une seconde partie principale (21) comportant une seconde surface de fixation (211) et une seconde surface de connexion (212) ; un certain nombre de secondes parties réceptrices (2110) s'étendant vers le haut depuis la seconde surface de fixation (211) ; la seconde partie principale (21) définissant une certain nombre de seconds trous traversants (2111), chaque seconde partie réceptrice (2110) entourant un second trou traversant respectif (2111) ; un certain nombre de secondes parties limitantes (2120) s'étendant vers le haut depuis la seconde surface de connexion (212) et chaque seconde partie limitante (2120) entourant une partie des seconds trous traversants (2111) ;
un certain nombre de batteries individuelles (30), chaque batterie individuelle (30) comprenant une anode (31) et une cathode (32) aux deux extrémités ; deux extrémités de chaque batterie individuelle (30) étant reçues dans une première partie réceptrice (1110) et une seconde partie réceptrice respective (2110) ; et
un ensemble carte de collecte de courant (40) comprenant deux ensembles cartes d'électrodes (41) reçus respectivement dans une première partie limitante (1120) et un certain nombre d'ensembles cartes intermédiaires (42), chaque ensemble carte intermédiaire (42) étant reçu dans une première partie limitante (1120) ou dans une seconde partie limitante (2120) ;
ledit ensemble carte d'électrodes (41) comprenant une première plaque de montage (411), une première carte de collecte de courant (412) montée sur la première plaque de montage (411), et un certain nombre de premiers composants conducteurs (413) ; le premier composant conducteur (413) comprenant un premier élément élastique (4131) connecté électriquement à la première carte de collecte de courant (412) ; le premier élément élastique (4131) comprenant un certain nombre de premiers bras élastiques (4135) s'étendant dans le premier trou traversant (1111) et venant en butée contre une extrémité de la batterie individuelle (30) ; ledit ensemble carte intermédiaire (42) comprenant une seconde plaque de montage (421), une seconde carte de collecte de courant (422) montée sur la seconde plaque de montage (421), et un certain nombre de seconds composants conducteurs (423) ; le second composant conducteur (423) comprenant un second élément élastique (4231) connecté électriquement à la seconde carte de collecte de courant (422) ; le second élément élastique (4231) comprenant un certain nombre de seconds bras élastiques (4235) s'étendant dans le premier trou traversant (1111) ou le second trou traversant (2111) et venant en butée contre une extrémité de la batterie individuelle (30) ;
ladite première plaque de montage (411) comprenant un premier corps principal (4111), le premier corps principal (4111) comprenant une première surface de serrage (4113) et une première surface de montage (4114) opposée à la première surface de serrage (4113) ; le premier corps principal (4111) définissant un certain nombre de premiers trous de passage (4115) traversant la première surface de serrage (4113) et la première surface de montage (4114) ; la première plaque de collecte de courant (412) définissant un certain nombre de premiers trous d'interconnexion (4121) ; un certain nombre de premières protubérances de limitation (4120) s'étendant depuis la première surface de serrage (4113), chaque première protubérance de limitation (4120) entourant un premier trou de passage respectif (4115) ; chaque premier trou d'interconnexion (4121) correspondant au premier trou de passage (4115) ; chaque premier composant conducteur (413) étant reçu dans une première partie de protubérance respective (4120) ;
ledit premier composant conducteur (413) comprenant en outre une première plaque conductrice (4132) et un premier fusible (4133) ; la première plaque conductrice (4132) étant reçue dans la première protubérance de limitation (4120) et fixée à la première surface de serrage (4113) autour du premier trou de passage (4115) ; le premier élément élastique (4131) comprenant une première partie de connexion (4134) se connectant électriquement à la première plaque conductrice (4132), les premiers bras élastiques (4135) de chaque premier élément élastique (4131) s'étendant depuis un côté de la première partie de connexion (4134) ; une extrémité du premier fusible (4133) traversant la premier trou de passage (4115) et le premier trou d'interconnexion (4121) et étant soudé à la première plaque conductrice (4132) et l'autre extrémité étant soudée à la première carte de collecte de courant (412).

2. Bloc batterie de puissance selon la revendication 1, ledit premier trou traversant (1111) et ledit premier trou de passage (4115) étant circulaires et coaxiaux l'un par rapport à l'autre ; le premier trou d'interconnexion (4121) comprenant une première partie large (4124) et une première partie étroite (4125) ; la première partie large (4124) étant circulaire et coaxiale par rapport au premier trou de passage (4115), et le diamètre de la première partie large (4124) correspondant au diamètre du premier trou de passage (4115) ; le premier fusible (4133) passant par la première partie large (4124) du premier trou d'interconnexion (4121) et faisant face séparément à la première partie étroite (4125).

3. Bloc batterie de puissance selon la revendication 1, ladite première protubérance de limitation (4120) étant cylindrique creuse et coaxiale par rapport au premier trou de passage (4115) ; le diamètre intérieur de la première protubérance de limitation (4120) étant supérieur au diamètre du premier trou de passage (4115) ; la première plaque conductrice (4132) étant circulaire et la première partie de connexion (4134) étant une bague annulaire ; la première partie de connexion (4134) étant coaxiale par rapport à la première plaque conductrice (4132) et soudée à la première plaque conductrice (4132) ; les premiers bras élastiques (4135) s'étendant depuis un côté intérieur de la bague annulaire, le diamètre de la plaque conductrice (4132) correspondant au diamètre extérieur de la première partie de connexion (4134), une extrémité distale de chaque premier bras élastique (4135) s'étendant en direction de l'axe central de la bague annulaire ; le diamètre extérieur de la première partie de connexion (4134) correspondant au diamètre intérieur de la première protubérance de limitation (4120).

4. Bloc batterie de puissance selon la revendication 1, ladite première plaque de montage (411) comprenant en outre une première paroi latérale (4112) définissant une ouverture (4118) ; une partie de contact (4119) s'étendant depuis le premier corps principal (4111) et la partie de contact (4119) passant par l'ouverture (4118) ; la première carte de collecte de courant (412) comprenant en outre une partie oreille (4126) s'étendant et se courbant depuis un côté de la première carte de collecte de courant (412) ; l'oreille d'électrode (4126) passant par l'ouverture (4118) et se fixant à la partie de contact (4119).

5. Bloc batterie de puissance selon la revendication 4, ladite première partie limitante (1120) comprenant une partie limitante d'anode (1121), une partie limitante de cathode (1122) et un certain nombre de premières parties limitantes intermédiaires (1123) ; la première surface de connexion (112) comprenant une première zone d'espacement (1124) au milieu, la partie limitante d'anode (1121) et la partie limitante de cathode (1122) étant réparties sur deux côtés de la première surface d'espacement (1124), et les premières parties limitantes intermédiaires (1123) étant également réparties sur deux côtés de la première surface d'espacement (1124) ; la partie limitante d'anode (1121) et la partie limitante de cathode (1122) recevant respectivement un ensemble carte d'électrodes (41) ; chaque première partie limitante intermédiaire (1123) recevant un ensemble carte intermédiaire (42) ; la première paroi latérale (4112) étant en contact avec une surface intérieure de la partie limitante d'anode (1121) ou de la partie limitante de cathode (1122).

6. Bloc batterie de puissance selon la revendication 5, ledit premier boîtier (10) comprenant une première paroi latérale (12) entourant la première surface de connexion (112) et la première partie limitante (1120) ; la première paroi latérale (12) définissant deux premières fentes (1201), la partie limitante d'anode (1121) et la partie limitante de cathode (1122) définissant respectivement une seconde fente (1125), chaque seconde fente (1125) correspondant à une première fente (1201), l'oreille d'électrode (4126) traversant la première fente (1201) et la seconde fente (1125) et se trouvant à l'extérieur de la première paroi latérale.

7. Bloc batterie de puissance selon la revendication 6, ladite seconde plaque de montage (421) comprenant un second corps principal (4211), le second corps principal (4211) comprenant une seconde surface de serrage (4213) et une seconde surface de montage (4214) opposée à la seconde surface de serrage (4213) ; le second corps principal (4211) définissant un certain nombre de seconds trous de passage (4215) traversant la seconde surface de serrage (4213) et la seconde surface de montage (4214) ; la seconde plaque de collecte de courant (422) définissant un certain nombre de seconds trous d'interconnexion (4221) ; un certain nombre de secondes protubérances de limitation (4218) s'étendant depuis la seconde surface de serrage (4213), chaque seconde protubérance de limitation (4218) entourant un second trou de passage respectif (4215) ; chaque second trou d'interconnexion (4221) correspondant au second trou de passage (4215) ; chaque second composant conducteur (423) étant reçu dans une seconde partie de protubérance de limitation respective (4218).

8. Bloc batterie de puissance selon la revendication 7, ledit second composant conducteur (423) comprenant en outre une seconde plaque conductrice (4232) et un second fusible (4233) ; la plaque conductrice (4232) étant reçue dans la seconde protubérance de limitation (4218) et fixée à la seconde surface de serrage (4213) autour du second trou de passage (4215) ; le second élément élastique (4231) comprenant une seconde partie de connexion (4234) en contact électrique avec la seconde plaque conductrice (4232), les seconds bras élastiques (4235) s'étendant depuis un côté de la seconde partie de connexion (4234) ; une extrémité du second fusible (4233) traversant le second trou de passage (4215) et le second trou d'interconnexion (4221) et étant soudée à la seconde plaque conductrice (4232) et l'autre extrémité étant soudée à la seconde carte de collecte de courant (422).

9. Bloc batterie de puissance selon la revendication 8, ledit second trou traversant (2111) et ledit second trou de passage (4215) étant circulaires et coaxiaux l'un par rapport à l'autre ; le second trou d'interconnexion (4221) comprenant une seconde partie large (4224) et une seconde partie étroite (4225) ; la seconde partie large (4224) étant circulaire et coaxiale par rapport au second trou de passage (4215), et le diamètre de la seconde partie large (4224) correspondant au diamètre du second trou de passage (4215) ; le second fusible (4233) passant par la seconde partie large (4224) du second trou d'interconnexion (4221) et faisant face séparément à la seconde partie étroite (4225).

10. Bloc batterie de puissance selon la revendication 8, ladite seconde protubérance de limitation (4218) étant cylindrique creuse et coaxiale par rapport au second trou de passage (4215) ; le diamètre intérieur de la seconde protubérance de limitation (4218) étant supérieur au diamètre du second trou de passage (4215) ; la seconde plaque conductrice (4232) étant circulaire ; la seconde partie de connexion (4234) étant coaxiale par rapport à la plaque conductrice et soudée à la seconde plaque conductrice ; la seconde partie de connexion (4234) étant une bague annulaire, le diamètre de la seconde plaque conductrice (4232) correspondant au diamètre extérieur de la seconde partie de connexion (4234), les seconds bras élastiques (4235) s'étendant depuis un côté intérieur de la bague annulaire et une extrémité distale de chaque second bras élastique (4235) s'étendant en direction de l'axe central de la bague annulaire ; le diamètre extérieur de la seconde partie de connexion (4234) correspondant au diamètre intérieur de la seconde protubérance de limitation (4218).

11. Bloc batterie de puissance selon la revendication 8, ladite seconde partie limitante (2120) comprenant une partie limitante de croisement (2121) et un certain nombre de secondes parties limitantes intermédiaires (2122) ; la seconde surface de connexion (212) comprenant une seconde zone d'espacement (2123) au milieu de la seconde surface de connexion (212), la partie de limitation de croisement (2121) croisant la seconde zone d'espacement (2123), et les secondes parties limitantes intermédiaires (2122) étant réparties sur deux côtés de la seconde zone d'espacement (2123) ; chaque seconde partie limitante intermédiaire (2122) recevant un ensemble carte intermédiaire (42) ; le second boîtier (20) comprenant en outre une seconde paroi latérale (22) s'étendant autour de la seconde partie principale (21), la seconde plaque de montage (421) comprenant en outre une seconde paroi latérale (4212), la seconde paroi latérale (4212) étant en contact avec une surface intérieure de la partie limitante de croisement (2121) ou la seconde partie intermédiaire (2122).

12. Bloc batterie de puissance selon la revendication 11, ledit premier boîtier (10) comprenant en outre une première partie support (123) s'étendant depuis une extrémité de la première partie principale (11) et une paire de premières protubérances (124) s'étendant depuis une autre extrémité de la première partie principale (11) ; la première partie support (123) définissant une paire de premiers trous de vis (1231), chaque première protubérance (124) définissant un deuxième trou de vis (1241) ; le second boîtier (20) comprenant en outre une seconde partie support (223) s'étendant depuis une extrémité de la seconde partie principale (21) et une paire de secondes protubérances (224) s'étendant depuis une autre extrémité de la seconde partie principale (21) ; la seconde partie support (223) définissant une paire de troisièmes trous de vis (2231) ; chaque seconde protubérance (224) définissant un quatrième trou de vis (2241) ; le premier boîtier (10) et le second boîtier (20) étant montés ensemble par des boulons traversant les premiers trous de vis (1231) et correspondant aux troisièmes trous de vis (2231) ; et passant par les seconds trous de vis (1241) et correspondant aux quatrièmes trous de vis (2241).

13. Ensemble carte de collecte de courant (40), comprenant,
deux ensembles cartes d'électrodes (41) ; et
un certain nombre d'ensembles cartes intermédiaires (42) ;
ledit ensemble carte d'électrodes (41) comprenant une première plaque de montage (411), une première carte de collecte de courant (412) montée sur la première plaque de montage (411), et un certain nombre de premiers composants conducteurs (413) ; le premier composant conducteur (413) comprenant un premier élément élastique (4131) connecté électriquement à la première carte de collecte de courant (412) ; le premier élément élastique (4131) comprenant un certain nombre de premiers bras élastiques (4135) ; l'ensemble carte intermédiaire (42) comprenant une seconde plaque de montage (421), une seconde carte de collecte de courant (422) montée sur la seconde plaque de montage (421), et un certain nombre de seconds composants conducteurs (423) ; le second composant conducteur (423) comprenant un second élément élastique (4231) connecté électriquement à la seconde carte de collecte de courant (422) ; le second élément élastique (4231) comprenant un certain nombre de seconds bras élastiques (4235) ;
ladite première plaque de montage (411) comprenant un premier corps principal (4111), le premier corps principal (4111) comprenant une première surface de serrage (4113) et une première surface de montage (4114) opposée à la première surface de serrage (4113) ; le premier corps principal (4111) définissant un certain nombre de premiers trous de passage (4115) traversant la première surface de serrage (4113) et la première surface de montage (4114) ; la première plaque de collecte de courant (412) définissant un certain nombre de premiers trous d'interconnexion (4121) ; un certain nombre de premières protubérances de limitation (4120) s'étendant depuis la première surface de serrage (4113), chaque première protubérance de limitation (4120) entourant un premier trou de passage respectif (4115) ; chaque premier trou d'interconnexion (4121) correspondant au premier trou de passage (4115) ; chaque premier composant conducteur (413) étant reçu dans une première partie de protubérance respective (4120), les premiers bras élastiques (4135) traversant le premier trou de passage (4115)
ledit premier composant conducteur (413) comprend en outre une première plaque conductrice (4132) et un premier fusible (4133) ; la première plaque conductrice (4132) étant reçue dans la première protubérance de limitation (4120) et fixée à la première surface de serrage (4113) autour du premier trou de passage (4115) ; le premier élément élastique (4131) comprenant une première partie de connexion (4134) en contact électrique avec la première plaque conductrice (4132), les premiers bras élastiques (4135) s'étendant depuis un côté de la première partie de connexion (4134) ; une extrémité du premier fusible (4133) traversant le premier trou de passage (4115) et le premier trou d'interconnexion (4121) et étant soudé à la première plaque conductrice (4132) et l'autre extrémité étant soudée à la première carte de collecte de courant (412).

14. Ensemble carte de collecte de courant selon la revendication 13, ledit premier trou d'interconnexion (4121) comprenant une première partie large (4124) et une première partie étroite (4125) ; la première partie large (4124) étant circulaire et coaxiale par rapport au premier trou de passage (4115) ; le premier fusible (4133) passant par la première partie large (4124) du premier trou d'interconnexion (4121) et faisant face séparément à la première partie étroite (4125) ; la première protrusion de limitation (4120) étant cylindrique creuse et coaxiale par rapport au premier trou de passage (4115) ; le diamètre interne de la première protubérance de limitation (4120) étant supérieur au diamètre du premier trou de passage (4115) ; la première plaque conductrice (4132) étant circulaire ; la première partie de connexion (4134) étant coaxiale par rapport à la première plaque conductrice (4132) et soudée à la première plaque conductrice (4132) ; la première plaque de connexion (4134) étant une bague annulaire, le diamètre de la plaque conductrice (4132) correspondant au diamètre extérieur de la première partie de connexion (4134), les premiers bras élastiques (4135) s'étendant depuis un côté intérieur de la bague annulaire et une extrémité distale de chaque premier bras élastique s'étendant en direction de l'axe central de la bague annulaire ; le diamètre extérieur de la première partie de connexion (4134) correspondant au diamètre intérieur de la première protubérance de limitation (4120).

15. Ensemble carte de collecte de courant selon la revendication 13, ladite première plaque de montage (411) comprenant en outre une première paroi latérale (4112) définissant une ouverture (4118) ; une partie de contact (4119) s'étendant depuis le premier corps principal (4111) et la partie de contact (4119) passant par l'ouverture (4118) ; la première carte de collecte de courant (412) comprenant en outre une partie oreille (4126) s'étendant et se courbant depuis un côté de la première carte de collecte de courant (412) ; l'oreille d'électrode (4126) passant par l'ouverture (4118) et se fixant à la partie de contact (4119).

16. Ensemble carte de collecte de courant selon la revendication 13, ladite seconde plaque de montage (421) comprenant un second corps principal (4211), le second corps principal (4211) comprenant une seconde surface de serrage (4213) et une seconde surface de montage (4214) opposée à la seconde surface de serrage (4213) ; le second corps principal (4211) définissant un certain nombre de second trous de passage (4215) traversant la seconde surface de serrage (4213) et la seconde surface de montage (4214) ; la seconde plaque de collecte de courant (422) définissant un certain nombre de seconds trous d'interconnexion (4221) ; un certain nombre de secondes protubérances de limitation (4218) s'étendant depuis la seconde surface de serrage (4213), chaque seconde protubérance de limitation (4218) entourant un second trou de passage respectif (4215) ; chaque second trou d'interconnexion (4221) correspondant au second trou de passage (4215) ; chaque second composant conducteur (423) étant reçu dans une seconde partie de protubérance de limitation respective (4218).

17. Ensemble carte de collecte de courant selon la revendication 16, ledit second composant conducteur (423) comprenant en outre une seconde plaque conductrice (4232) et un second fusible (4233) ; la plaque conductrice (4232) étant reçue dans la seconde protubérance de limitation (4218) et fixée à la seconde surface de serrage (4213) autour du second trou de passage (4215) ; le second élément élastique (4231) comprenant une seconde partie de connexion (4234) en contact électrique avec la seconde plaque conductrice (4232), les seconds bras élastiques (4235) s'étendant depuis un côté de la seconde partie de connexion (4234) ; une extrémité du second fusible (4233) traversant le second trou de passage (4215) et le second trou d'interconnexion (4221) et étant soudée à la seconde plaque conductrice (4232) et l'autre extrémité étant soudée à la seconde carte de collecte de courant (422).
